# EUROPÄISCHE PATENTSCHRIFT

(11) **EP 3 898 067 B1**
(45) Veröffentlichungstag und Bekanntmachung des Hinweises auf die Patenterteilung: **22.05.2024**
(21) Anmeldenummer: 19827600.8
(22) Anmeldetag: 02.12.2019
(51) Int. Cl.: B23K 26/082, B23K 26/10, B23K 26/12, B23K 26/14, B23K 26/38, H02G 1/12, B23K 101/38

(54) **LASERSCHNEIDEVORRICHTUNG ZUM LASERSCHNEIDEN VON SCHIRMDRÄHTEN FÜR GESCHIRMTE LEITUNGEN UND VERFAHREN ZUM LASERSCHNEIDEN VON SCHIRMDRÄHTEN MIT EINER SOLCHEN LASERSCHNEIDEVORRICHTUNG**
LASER CUTTING APPARATUS FOR SHIELDED LINES AND METHOD FOR LASER CUTTING OF SHIELDED LINES COMPRISING SUCH A LASER CUTTING APPARATUS
DISPOSITIF DE COUPE LASER POUR FILS BLINDÉS ET PROCÉDÉ DE COUPE LASER DE FILS BLINDÉS À L'AIDE D'UN TEL DISPOSITIF

(30) Priorität: 17.12.2018 DE 102018132530
(43) Veröffentlichungstag der Anmeldung: 27.10.2021
(73) Patentinhaber: MD Elektronik GmbH, 84478 Waldkraiburg (DE)
(72) Erfinder: MANNHERZ, Herbert, 76703 Kraichtal (DE); MISSLINGER, Tobias, 84178 Kröning (DE)
(86) Internationale Anmeldenummer: PCT/DE2019/101030
(87) Internationale Veröffentlichungsnummer: WO 2020/125856

(56) Entgegenhaltungen:
- EP-A1- 2 887 475
- EP-A1- 3 404 786
- WO-A1-2017/037691
- CN-A- 106 654 806

## Beschreibung

Die Erfindung betrifft eine Laserschneidevorrichtung zum Laserschneiden von Schirmdrähten von geschirmten Leitungen und ein Verfahren zum Laserschneiden von geschirmten Leitungen mit einer solchen Laserschneidevorrichtung. Die erfindungsgemäße Laserschneidevorrichtung eignet sich insbesondere zum gleichmäßigen Kürzen von Schirmdrähten.

Um geschirmte Leitungen zu konfektionieren, also beispielsweise mit einem Steckverbinder zu versehen, sind in Abhängigkeit der Leiteranzahl und der unterschiedlichen Schichten, aus denen eine solche geschirmte Leitung besteht, eine Vielzahl von Arbeitsschritten notwendig. So müssen bei einer koaxialen Leitung nicht nur der zumindest eine Innenleiter oder bei einer HSD-Leitung (High-Speed Data) die mehreren Innenleiter freigelegt werden, sondern es müssen auch die Außenleiter, bei denen es sich beispielsweise um Schirmdrähte und/oder Schirmfolien handelt, entsprechend freigelegt und derart angeordnet werden, dass ein so vorbereitetes Leitungsende mit einem Steckverbinder versehen werden kann.

Das Freilegen der einzelnen elektrischen Leitungen bzw. Adern einer geschirmten Leitung kann einerseits von Hand und andererseits maschinell geschehen. Die Qualität und der Durchsatz beim manuellen Entfernen der Schirmdrähte und/oder Schirmfolien sind dabei stark personenabhängig. Auch beim automatisierten Entfernen kann die Ausschussquote erheblich sein. Dies ist insbesondere deshalb der Fall, weil häufig zum Entfernen dieser Komponenten rotierende Messer verwendet werden, die einem sehr hohen Verschleiß unterliegen. Werden diese nicht rechtzeitig gewechselt, steigt die Ausschussquote.

Um die Konfektionierung von geschirmten Leitungen zu erleichtern, schlägt die WO 2017/037691 A1 vor, einen Laser zum Einschneiden von Kabeln zu verwenden. Der Laserstrahl wird über einen ersten, zweiten und dritten Spiegel in Richtung des zu schneidenden Kabels fokussiert. Der Laserstrahl trifft dabei radial auf das Kabel, schneidet dieses also an seiner Umfangswandung. Dabei wird zuvor ein Stützcrimp auf den Mantel des Kabels aufgebracht. Anschließend wird die Schirmung des Kabels freigelegt und zurückgeklappt (180°), sodass die Schirmung über dem Stützcrimp zum Liegen kommt. Dann wird die Schirmung mit dem Laser geschnitten. Der Stützcrimp dient dabei als Unterlage, sodass der Laserstrahl den Mantel des Kabels nicht beschädigen kann.

Nachteilig an dem aus der WO 2017/037691 A1 bekannten Verfahren ist, dass ein solcher Stützcrimp nicht auf jedem Kabel anbringbar ist und die Konfektionierung dadurch länger dauert und damit teurer ist.

CN 106 654 806 A offenbart eine Laserschneidevorrichtung zum Laserschneiden von Schirmdrähten für geschirmte Leitungen gemäß dem Oberbegriff des Anspruchs 1.

Es ist daher die Aufgabe der Erfindung eine Laserschneidevorrichtung für Schirmdrähte einer geschirmten Leitung und ein Verfahren zum Laserschneiden von solchen geschirmten Leitungen zu schaffen, durch die Schirmdrähte von geschirmten Leitungen reproduzierbar und schnell eingeschnitten werden können, um eine weitestgehende oder vollständige Automatisierung bei der Konfektionierung dieser geschirmten Leitungen zu ermöglichen.

Die Aufgabe wird hinsichtlich der Laserschneidevorrichtungen zum Laserschneiden von Schirmdrähten für geschirmte Leitungen gemäß den Merkmalen nach Anspruch 1 und hinsichtlich des Verfahrens zum Laserschneiden gemäß den Merkmalen nach Anspruch 29 gelöst. Ansprüche 2 bis 28 erläutern erfindungsgemäße Weiterbildungen der Laserschneidevorrichtung.

Die erfindungsgemäße Laserschneidevorrichtung dient insbesondere zum Laserschneiden von Schirmdrähten. Schirmdrähte bestehen dabei vorzugsweise ausschließlich aus einem Metall bzw. einzelnen Metallstreifen, die miteinander verflochten oder gewendelt sein können. Bei dem Metall handelt es sich beispielsweise um Kupfer, insbesondere galvanisch verzinntes Kupfer. Die Schirmdrähte sind beispielsweise ca. 50 µm bis ca. 700 µm, insbesondere typischerweise ca. 80 µm dick. Die Laserschneidevorrichtung umfasst außerdem eine Lasereinrichtung, die dazu ausgebildet ist, einen Laserstrahl zu erzeugen. Der Laserstrahl kann verschiedene Wellenlängen aufweisen. Beispielsweise kann er mit einer Wellenlänge von 1060 nm bis 1064 nm oder 10600 nm arbeiten. Die Lasereinrichtung kann daher die Wellenlänge entsprechend umstellen bzw. die Lasereinrichtung umfasst verschiedene Laser, die nacheinander zugeschaltet werden können. Bevorzugt wird ein Festkörper-Laser verwendet. Hierzu gehören z.B. Fiber-Laser, Scheiben-Laser oder UKP-Laser (Ultrakurzpuls-Laser), die beispielsweise mit einer Wellenlänge im Infrarotbereich betrieben werden. Er dient zum Bearbeiten von Metall, z.B. zum Schneiden von Schirmdrähten. Die geschirmte Leitung ist vorzugsweise ca. 2,2mm, 2,6mm, 32mm oder 5,8mm dick. Abweichungen von weniger als ±40%, ±30%, ±20%, ±10% oder weniger als ±5% sind möglich.

Die Laserschneidevorrichtung umfasst eine Lasereinrichtung mit einer Laserquelle, die dazu ausgebildet ist, einen Laserstrahl zu erzeugen. Es ist eine Gehäuseanordnung vorgesehen, die einen Schneideraum umgrenzt, der über eine Kabelaufnahmeöffnung zugänglich ist. Es ist außerdem eine Spannvorrichtung vorgesehen, die von einer Zentralachse durchsetzt ist. Die Spannvorrichtung umfasst vorzugsweise zumindest eine erste und eine zweite Spannbacke oder Pressbacke, wobei die geschirmte Leitung zwischen der zumindest einen ersten und der zweiten Spannbacke positionierbar, also anordenbar ist. Dies kann automatisiert erfolgen. Die erste Spannbacke umfasst eine Auflagefläche und die zweite Spannbacke umfasst eine Auflagefläche, wobei die Auflagefläche der ersten Spannbacke mit der Auflagefläche der zweiten Spannbacke in einem Schließzustand bzw. Klemmzustand in Kontakt bringbar ist, wodurch die geschirmte Leitung zwischen der ersten und der zweiten Spannbacke einklemmbar oder eingeklemmt ist. Die zumindest eine erste Spannbacke umfasst eine Stirnseite und die zweite Spannbacke umfasst eine Stirnseite. Durch diese zumindest zwei Stirnseiten ist ein Stirnseitenbereich der Spannvorrichtung gebildet. Die geschirmte Leitung ist in dem Schließzustand derart zwischen der ersten und der zweiten Spannbacke positionierbar, dass die geschirmte Leitung über die Stirnseite der ersten Spannbacke und über die Stirnseite der zweiten Spannbacke vorsteht, also übersteht. Die Schirmdrähte sind dabei radial oder mit radialer Komponente von der geschirmten Leitung nach außen hin aufstellbar und an dem Stirnseitenbereich der Spannvorrichtung anlegbar. Dieses Aufstellen kann erfolgen, bevor die Leitung in die Spannvorrichtung eingelegt wird oder danach, also nach dem Schließen der Spannbacken. Der Wortlaut "Aufstellen" bedeutet insbesondere, dass die Schirmdrähte in einem Winkel zum Mantel der Leitung gebogen werden, der insbesondere ca. 90° (= radial) beträgt. Abweichungen von vorzugsweise weniger als 50°, 45° 40°, 35°, 30°, 25°, 20°, 15°, 10° oder weniger als 5° von 90° sind ebenfalls möglich (= mit radialer Komponente). Ein Umklappen der Schirmdrähte, also um 180° nach "hinten" findet dagegen nicht statt. Es ist weiterhin eine Steuervorrichtung vorgesehen, die dazu ausgebildet ist, die Lasereinrichtung derart anzusteuern, dass der Laserstrahl auf den Stirnseitenbereich der Spannvorrichtung strahlt, wodurch die aufgestellten Schirmdrähte der geschirmten Leitung im Schneideraum der Gehäuseanordnung schneidbar sind.

Es ist besonders vorteilhaft, dass die Schirmdrähte lediglich aufgestellt, aber nicht zurückgeklappt werden. Durch das Aufstellen und Anordnen vor dem Stirnseitenbereich der Spannvorrichtung können diese mit einem Laserstrahl geschnitten werden, ohne dass ein Stützcrimp notwendig ist, wie dies im Stand der Technik beschrieben wurde. Die Konfektionierung der geschirmten Leitung gelingt daher einfacher.

In einer bevorzugten Weiterbildung umfasst die zumindest eine erste Spannbacke und/oder die zweite Spannbacke eine Klemmausnehmung, die auch als Aufnahmenut bezeichnet werden kann. Diese Klemmausnehmung erstreckt sich entlang einer Zentralachse. Vorzugsweise werden die zumindest eine erste Spannbacke und/oder zweite Spannbacke über ihre vollständige Länge von der Klemmausnehmung durchsetzt. Es wäre allerdings auch möglich (bei kurzen Leitungen), dass sich die Klemmausnehmung nur über eine Teillänge der zumindest einen ersten Spannbacke und/oder zweiten Spannbacke erstreckt. Die Klemmausnehmung kann auch noch ein weiteres, vorzugsweise elastisches Material umfassen, damit die geschirmte Leitung nicht so leicht verrutschen kann. Die gesamte Klemmausnehmung der Spannvorrichtung hat im Schließzustand vorzugsweise einen runden Querschnitt. Je nach geschirmter Leitung könnte dieser auch eckig sein.

Grundsätzlich kann es mehr als zwei Spannbacken geben, wobei vorzugsweise jeweils ein Teil der gesamten Klemmausnehmung in jedem dieser Spannbacken gebildet ist und wobei die Klemmausnehmung im Schließzustand eine der oben genannten Querschnittsformen annimmt.

Die Steuervorrichtung ist dazu ausbildet, die Spannvorrichtung von einem "Offenzustand", in welchem die zumindest beiden Spannbacken voneinander entfernt sind, um die geschirmte Leitung in die entsprechende Klemmausnehmung einlegen zu können, in den "Schließzustand" zu überführen. Hierzu umfasst die Spannvorrichtung eine nicht näher beschriebene Verstelleinrichtung (z.B. Elektromotor mit optionalem Getriebe).

In einer bevorzugten Ausführungsform umfasst die Spannvorrichtung eine Laserstrahlabsorptionsnut. Die Laserstrahlabsorptionsnut umgrenzt in Draufsicht auf den Stirnseitenbereich der Spannvorrichtung die Klemmausnehmung, wobei die Laserstrahlabsorptionsnut zumindest teilweise durch die aufgestellten Schirmdrähte der geschirmten Leitung verdeckbar ist. Die Steuervorrichtung ist dazu ausgebildet, die Lasereinrichtung derart anzusteuern, dass der Laserstrahl in Richtung der Laserstrahlabsorptionsnut strahlt, wodurch die Schirmdrähte, die vor der Laserstrahlabsorptionsnut angeordnet sind, im Bereich der Laserstrahlabsorptionsnut abgeschnitten werden können. Die Steuervorrichtung ist dabei insbesondere dazu ausgebildet, die Lasereinrichtung derart anzusteuern, dass der Laserstrahl entlang der Laserstrahlabsorptionsnut geführt wird, die vorzugsweise ringförmig, insbesondere kreisringförmig, ausgebildet ist. Die Tiefe dieser Laserstrahlabsorptionsnut beträgt wenige Millimeter. Die Laserstrahlabsorptionsnut dient dazu, ein Verschweißen der Schirmdrähte an und/oder mit dem Stirnseitenbereich der Spannvorrichtung zu verhindern. Die Laserstrahlabsorptionsnut ermöglicht einen freien Durchgang der Laserstrahlung, ohne eine Rückreflektion durch die Oberfläche der Aufnahme, weiter eine Absorption der verbleibenden Restenergie, eine Vermeidung von Ablagerungen auf der Aufnahme, speziell im Schneidbereich.

Gemäß der Erfindung ist noch eine Gegenspannvorrichtung vorgesehen. Diese umfasst einen Auflagebereich bzw. Anpressbereich und eine Laseröffnung. Die Steuervorrichtung ist dazu ausgebildet, um beispielsweise die Gegenspannvorrichtung derart anzusteuern, dass diese in Richtung des Stirnseitenbereichs der Spannvorrichtung verfahrbar ist, wobei die aufgestellten Schirmdrähte der geschirmten Leitung zwischen dem Stirnseitenbereich der Spannvorrichtung und dem Auflagebereich der Gegenspannvorrichtung einklemmbar sind. Ergänzend oder alternativ ist die Steuervorrichtung dazu ausgebildet, um die Spannvorrichtung derart anzusteuern, dass diese in Richtung des Auflagebereichs der Gegenspannvorrichtung verfahrbar ist, wobei die aufgestellten Schirmdrähte der geschirmten Leitung zwischen dem Stirnseitenbereich der Spannvorrichtung und dem Auflagebereich der Gegenspannvorrichtung einklemmbar sind. Um die Gegenspannvorrichtung bzw. die Spannvorrichtung entsprechend ansteuern zu können, umfassen diese jeweils eine nicht näher beschriebene Verstelleinrichtung (z.B. Elektromotor mit optionalem Getriebe). Die Steuervorrichtung ist weiterhin dazu ausgebildet, die Lasereinrichtung derart anzusteuern, dass der Laserstrahl durch die Laseröffnung strahlt, wodurch die aufgestellten Schirmdrähte der geschirmten Leitung hinter der Laseröffnung schneidbar sind. Durch den Einsatz einer entsprechenden Gegenspannvorrichtung sind die Schirmdrähte ausgerichtet. Insbesondere ist der Abstand zur Lasereinrichtung gleich. Nach dem Schneiden verbleiben die Schirmdrähte außerdem noch in ihrer Position und können erst danach von dort definiert ab- oder eingesaugt (über eine Absaugvorrichtung) werden.

Um die Schirmdrähte besser fixieren zu können, kann in einem weiteren Ausführungsbeispiel eine elastische Klemmleisteneinrichtung vorgesehen sein, die zwischen dem Auflagebereich der Gegenspannvorrichtung und dem Stirnseitenbereich der Spannvorrichtung angeordnet ist. Die aufgestellten Schirmdrähte sind dann mit der elastischen Klemmleisteneinrichtung in Kontakt bringbar bzw. gebracht. Bei der Klemmleisteneinrichtung kann es sich z.B. um einen Gummi, insbesondere um einen O-Ring handeln. Dadurch vergrößert sich dann die Auflagefläche, um die Schirmdrähte zu fixieren.

Die elastische Klemmleisteneinrichtung ist an dem Auflagebereich der Gegenspannvorrichtung angeordnet (z.B. festgeklebt bzw. angespritzt (2K-Verfahren)) und umgrenzt die Laseröffnung. Ergänzend oder alternativ könnte die elastische Klemmleisteneinrichtung auch an dem Stirnseitenbereich der Spannvorrichtung angeordnet (z.B. festgeklebt bzw. angespritzt (2K-Verfahren)) sein.

In einem zusätzlichen Ausführungsbeispiel ist die Gegenspannvorrichtung zumindest zweiteilig aufgebaut. Sie umfasst zumindest einen ersten Teil und einen zweiten Teil. Der zumindest eine erste Teil der Gegenspannvorrichtung umfasst Kontaktflächen und der zumindest eine zweite Teil der Gegenspannvorrichtung umfasst Kontaktflächen. Die Steuervorrichtung ist dazu ausgebildet, die Gegenspannvorrichtung derart anzusteuern, dass der zumindest eine erste Teil und der zweite Teil der Gegenspannvorrichtung solange aufeinander zu bewegbar sind, bis sich die Kontaktflächen des zumindest einen ersten Teils und die Kontaktflächen des zumindest einen zweiten Teils in einem Schließzustand der Gegenspannvorrichtung berühren. Dadurch wird das Fixieren der Schirmdrähte erleichtert. Um die einzelnen Teile der Gegenspannvorrichtung entsprechend verfahren zu können, umfassen diese eine nicht näher beschriebene Verstelleinrichtung (z.B. Elektromotor mit optionalem Getriebe).

Die Trennung der Gegenspannvorrichtung in einen ersten und einen zweiten Teil ist bevorzugt so ausgebildet, dass eine im Schließzustand durch die Kontaktfläche des ersten oder zweiten Teils der Gegenspannvorrichtung verlaufende oder gelegte Ebene nicht radial zur Zentralachse verlaufend ausgebildet ist oder zu liegen kommt. Ergänzend oder alternativ ist es auch möglich, dass die Kontaktfläche des ersten Teils der Gegenspannvorrichtung gebogen ist oder mehrere Teilflächen umfasst, die winkelig zueinander verlaufen. Selbiges kann auch für die Kontaktfläche des zweiten Teils der Gegenspannvorrichtung gelten. Dadurch wird verhindert, dass ein Schirmdraht direkt entlang der Kontaktflächen (an den Randbereichen) angeordnet werden kann, wodurch dieser nicht mehr richtig zwischen dem Stirnseitenbereich der Spannvorrichtung und dem Auflagebereich der Gegenspannvorrichtung fixierbar wäre.

Nach dem Schneiden ist die Steuervorrichtung insbesondere dazu ausgebildet, die Spannvorrichtung derart anzusteuern, dass die zumindest eine erste und zweite Spannbacke voneinander entfernt werden und die Leitung aus dem Schneideraum entnehmbar ist. Dabei soll eine Anpresskraft zwischen der zumindest einen ersten und zweiten Spannbacke hin zur Gegenspannvorrichtung erhalten bleiben. Dadurch bleiben die abgeschnittenen Schirmdrähte an Ort und Stelle und können nicht an der Leitung angeordnet bleiben, um spätere weitere Verfahrensschritte zu stören. Alternativ kann die Steuervorrichtung die Gegenspannvorrichtung auch derart ansteuern, dass der zumindest eine erste Teil und der zweite Teil der Gegenspannvorrichtung voneinander entfernt werden, wobei eine Anpresskraft zwischen dem zumindest einen ersten und zweiten Teil der Gegenspannvorrichtung hin zu dem Stirnseitenbereich der Spannvorrichtung erhalten bleibt. Es wäre auch möglich, dass die Anpresskraft bei beiden Varianten nicht erhalten bleibt, wobei die Schirmdrähte dann unmittelbar abgesaugt werden müssten.

In einer besonderen Ausführungsform ist noch eine Aufstelleinrichtung vorgesehen. Diese ist dazu ausgebildet, um die Schirmdrähte der geschirmten Leitung aufzustellen (z.B. -90° hin zum Mantel der Leitung). Die Aufstelleinrichtung umfasst z.B. eine Bürsteneinrichtung, die in Kontakt zu den Schirmdrähten der geschirmten Leitung bringbar ist. Die Aufstelleinrichtung ist innerhalb des Schneideraums angeordnet. Das Aufstellen kann erfolgen, wenn die geschirmte Leitung bereits in der Spannvorrichtung eingeklemmt ist oder zuvor.

In einer weiteren bevorzugten Ausführungsform umfasst die Lasereinrichtung eine Laserstrahl-Umlenkvorrichtung, die dazu ausgebildet ist, den Laserstrahl derart zu führen, dass der Laserstrahl in Richtung der Zentralachse oder überwiegend in Richtung der Zentralachse auf den Stirnseitenbereich der Spannvorrichtung ausgerichtet ist und sich dort um 360° um die Zentralachse herum bewegt, wodurch die radial abstehenden Schirmdrähte der geschirmten Leitung schneidbar sind bzw. geschnitten werden. Die Steuervorrichtung ist dazu ausgebildet, die Laserstrahl-Umlenkvorrichtung der Lasereinrichtung derart anzusteuern, dass der Laserstrahl auf dem Stirnseitenbereich der Spannvorrichtung bevorzugt eine Kreisbahn beschreibt. Besonders bevorzugt wird bei Einsatz der Laserstrahlabsorptionsnut diese nachgefahren.

In einer bevorzugten Weiterbildung umfasst die Laserstrahl-Umlenkvorrichtung zumindest eine erste und eine zweite Spiegelanordnung, sowie zumindest eine erste und eine zweite Verstelleinrichtung. Bei den Verstelleinrichtungen handelt es sich vorzugsweise um Elektromotoren und/oder um Piezoaktoren. Die Spiegelanordnungen sind dabei im Strahlengang des Laserstrahls angeordnet und dazu ausgebildet, den Laserstrahl um 360° um die Zentralachse herum entlang der Zentralachse zu bewegen. Im Betrieb wird der Laserstrahl von der ersten Spiegelanordnung zur zweiten Spiegelanordnung reflektiert und von der zweiten Spiegelanordnung (oder der letzten Spiegelanordnung) in Richtung des Stirnseitenbereichs der Spannvorrichtung. Die Laserstrahl-Umlenkvorrichtung kann noch weitere Spiegelanordnungen umfassen. Die erste Verstelleinrichtung ist dabei dazu ausgebildet, die erste Spiegelanordnung derart zu verdrehen und/oder zu verschwenken, dass der Laserstrahl überwiegend oder ausschließlich entlang der Y-Achse verstellt oder bewegt wird. In diesem Fall ist die zweite Verstelleinrichtung dazu ausgebildet, die zweite Spiegelanordnung derart zu verdrehen und/oder zu verschwenken, dass der Laserstrahl überwiegend oder ausschließlich entlang der Z-Achse verstellt bzw. bewegt wird. In einer anderen Ausführungsform kann die erste Verstelleinrichtung den Laserstrahl überwiegend oder ausschließlich entlang der Z-Achse und die zweite Verstelleinrichtung den Laserstrahl überwiegend oder ausschließlich entlang der Y-Achse verstellen oder bewegen. Dabei ist es wichtig, dass die Y-Achse und die Z-Achse in einem Winkel 90° zueinander stehen und dass die beiden Achsen wiederum in einem Winkel von 90° zur X-Achse stehen, wobei die X-Achse entlang der Zentralachse verläuft. Dadurch ist es möglich, dass der Laserstrahl sehr schnell (mehrere Umrundungen pro Sekunde) entlang der umlaufenden Spiegelwandung um die Zentralachse herum geführt wird. Die geschirmte Leitung (die Schirmdrähte) kann dabei sehr genau mit einem geringen Energieeintrag pro Umdrehung geschnitten werden. Ein solcher Schneidvorgang erfordert, dass der Laserstrahl mehrfach vorzugsweise 1 bis 30 mal pro Sekunde (ggf. auch mehr als ca. 30 mal pro Sekunde) entlang einer Bahn auf dem Stirnseitenbereich der Spannvorrichtung um 360° um die Zentralachse herum bewegt wird.

Grundsätzlich wäre es auch möglich, dass die Laserstrahl-Umlenkvorrichtung auch einen Roboterarm umfasst, der den Laserstrahl führt.

In einer weiteren bevorzugten Ausführungsform verläuft die Zentralachse der Spannvorrichtung durch die letzte Spiegelanordnung, in diesem Fall durch die zweite Spiegelanordnung. Dadurch ist sichergestellt, dass der Weg des Laserstrahls auf jeder Position an dem Stirnseitenbereich der Spannvorrichtung hin zur Lasereinrichtung derselbe ist.

In einer weiteren erfindungsgemäßen Ausführungsform umfasst die Lasereinrichtung eine Teleskopeinrichtung. Die Teleskopeinrichtung der Lasereinrichtung ist zwischen einer Laserquelle der Lasereinrichtung und der Laserstrahl-Umlenkvorrichtung der Lasereinrichtung angeordnet und dazu ausgebildet, die Fokussierung des Laserstrahls zu ändern. Dadurch wird sichergestellt, dass stets der optimale Energieeintrag pro Fläche (Auftreffpunkt des Laserstrahls) möglich ist.

Die Spannvorrichtung und die Laserquelle der Lasereinrichtung sind während des Laserschneidens vorzugsweise relativ unverschiebbar zueinander bzw. ortsfest angeordnet.

In einer weiteren erfindungsgemäßen Ausführungsform umfasst die Laserschneidevorrichtung noch eine Düseneinrichtung, die in dem Schneideraum angeordnet ist. Die Düseneinrichtung umfasst zumindest eine Düse und ist dazu ausgebildet, aus dieser Luft oder ein anderes Prozessgas in den Schneideraum zu blasen. Weiterhin ist noch eine Absaugvorrichtung vorgesehen, die ein oder mehrere Absaugöffnungen aufweist, wobei die Absaugvorrichtung dazu ausgebildet ist, die durch die Düseneinrichtung zugeführte Luft oder das zugeführte Prozessgas und die durch den Laserschneideprozess entstehenden Emissionen und/oder abgeschnittenen Teile der geschirmten Leitung einzusaugen. Die Absaugvorrichtung ist vorzugsweise näher an dem Stirnseitenbereich der Spannvorrichtung angeordnet als die Düseneinrichtung. Der Luftdruck im Schneideraum ist vorzugsweise geringer als der Luftdruck außerhalb der Gehäuseanordnung. Dadurch wird verhindert, dass Emissionen aus dem Schneideraum austreten.

Vorzugsweise ist noch eine Transport- und Haltevorrichtung vorgesehen. Die Transport- und Haltevorrichtung ist dazu ausgebildet, die Spannvorrichtung oder die geschirmte Leitung zu halten und durch die Kabeleinführöffnung in den Schneideraum zu bewegen. Alternativ dazu ist die Steuervorrichtung dazu ausgebildet, die Transport- und Haltevorrichtung derart anzusteuern, dass diese die geschirmte Leitung über die Kabeleinführöffnung in den Schneideraum einführt und zwischen die zumindest eine erste und zweite Spannbacke positioniert. Die Steuervorrichtung ist ferner dazu ausgebildet, die Spannvorrichtung derart anzusteuern, dass diese eine Spannbacke auf die andere oder zumindest beide Spannbacken aufeinander zu bewegt, wodurch die geschirmte Leitung zwischen der zumindest einen ersten und zweiten Spannbacke verklemmbar bzw. verklemmt ist. Hierzu umfasst die Transport- und Haltevorrichtung eine nicht näher beschriebene Verstelleinrichtung (z.B. Elektromotor mit optionalem Getriebe). Besonders bevorzugt verläuft die Zentralachse fluchtend mit einer Längsachse der geschirmten Leitung, die zwischen der zumindest einen ersten und zweiten Spannbacke einklemmbar bzw. eingeklemmt ist.

Das erfindungsgemäße Verfahren zum Laserschneiden von Schirmdrähten gemäß dem Anspruch 29 mit einer solchen Laserschneidevorrichtung umfasst mehrere Verfahrensschritte. In einem ersten Verfahrensschritt wird die geschirmte und zu schneidende Leitung in die Spannvorrichtung eingelegt und die Schirmdrähte der geschirmten Leitung werden aufgestellt. Dies kann in beliebiger Reihenfolge erfolgen. Vorzugsweise findet das Aufstellen statt, nachdem die zu schneidende Leitung in die Spannvorrichtung eingelegt und in dieser verklemmt ist. In einem weiteren Verfahrensschritt wird die Lasereinrichtung derart angesteuert, dass der Laserstrahl auf die aufgestellten Schirmdrähte an dem Stirnseitenbereich der Spannvorrichtung trifft. In einem weiteren Schritt wird der Laserstrahl (permanent) derart geführt, so dass der Laserstrahl die Schirmdrähte der geschirmten Leitung auf eine bestimmte Länge abschneidet. Bevorzugt wird der Laserstrahl derart geführt, dass sich der Laserstrahl an dem Stirnseitenbereich der Spannvorrichtung um 360° (z.B. auf einer Kreisbahn) um die Zentralachse herum bewegt, wodurch die radial abstehenden Schirmdrähte der geschirmten Leitung schneidbar sind, also gekürzt werden können.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figuren 1A und 1B:: einen beispielhaften Aufbau einer Koaxialleitung und einer HSD-Leitung;
- Figuren 2A und 2B:: verschiedene Darstellungen der Spannvorrichtung;
- Figuren 3A, 3B, 3C, 3D und 3E:: verschiedene Schnittdarstellung durch die geschirmte Leitung und die Spannvorrichtung, die das Aufstellen und Schneiden der Schirmdrähte verdeutlichen;
- Figuren 4A und 4B:: verschiedene Darstellungen der Gegenspannvorrichtung;
- Figur 5:: einen beispielhaften Aufbau einer Lasereinrichtung;
- Figur 6:: ein Ausführungsbeispiel der erfindungsgemäßen Laserschneidevorrichtung; und
- Figuren 7A, 7B und 7C:: verschiedene Ablaufdiagramme, die ein erfindungsgemäßes Verfahren zum Laserschneiden von geschirmten Leitungen näher erläutert.

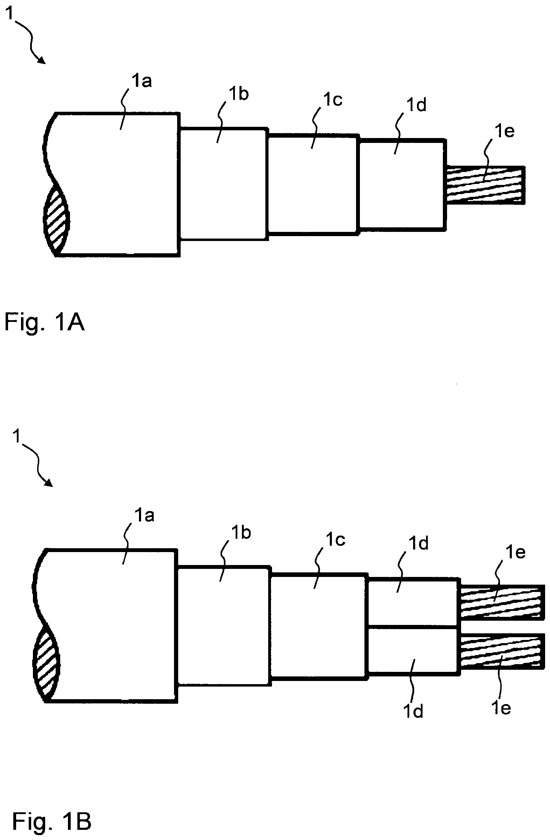

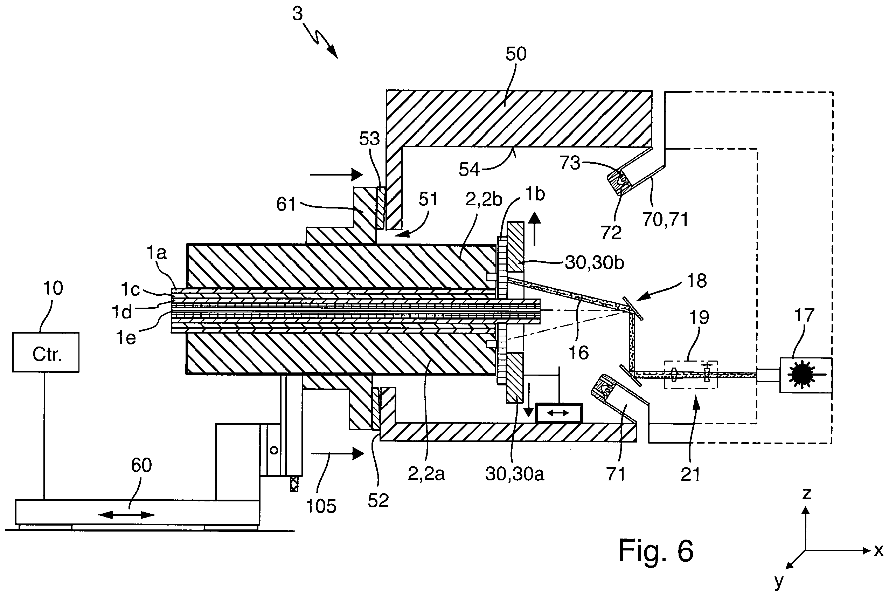

Die Figuren 1A und 1B zeigen verschiedene Ausführungsbeispiele einer geschirmten Leitung 1, die mit einer später beschriebenen Laserschneidevorrichtung 3 (siehe Figur 6) geschnitten werden. In Figur 1A ist eine geschirmte Leitung 1 in Form einer Koaxialleitung dargestellt. Diese umfasst einen Außenmantel 1a, der vorzugsweise aus einem (elastischen) Dielektrikum wie z.B. Kunststoff besteht. Unter diesem Außenmantel sind Schirmdrähte 1b angeordnet, die auch als Schirmdrahtgeflecht bezeichnet werden können. Diese Schirmdrähte 1b bestehen aus einem Metall und sind elektrisch leitfähig. Diese Schirmdrähte 1b werden mit der erfindungsgemäßen Laserschneidevorrichtung 3 geschnitten und gekürzt. Unter diesen Schirmdrähten 1b bzw. dem Schirmdrahtgeflecht befindet sich eine Schirmfolie 1c. Diese Schirmfolie 1c umfasst ein dielektrisches Material, insbesondere eine Kunststofffolie (z.B. PET-Folie), auf die ein Metall aufgedampft bzw. auf andere Weise auf die Folie aufgetragen, beispielsweise aufgesputtert wurde. Die Schichtdicke dieses Metalls, bei dem es sich beispielsweise um Aluminium handeln kann, beträgt vorzugsweise 10 µm bis 20 µm.

Unterhalb dieser Schirmfolie 1c ist ein Dielektrikum 1d angeordnet, welches aus einem elektrischen Isolator, insbesondere einem (elastischen) Kunststoff besteht.

Dieses Dielektrikum 1d umgibt einen Innenleiter 1e, der aus einem elektrisch leitfähigen Material wie z.B. Kupfer besteht oder ein solches umfasst.

In Figur 1B ist eine HSD-Leitung 1 dargestellt. Der Aufbau bezüglich des Außenmantels 1a, der Schirmdrähte 1b und der Schirmfolie 1c entspricht demjenigen Aufbau der Koaxialleitung 1 aus Figur 1A. Anstelle eines Dielektrikums 1d, welches einen Innenleiter 1e umfasst, umgibt die Schirmfolie 1c in Figur 1B mehrere Dielektrika 1d, wobei jedes dieser Dielektrika 1d einen Innenleiter 1e umfasst, also umgibt. Die HSD-Leitung 1 aus Figur 1B umfasst daher mehrere Innenleiter 1e, vorzugsweise 2, 3, 4, 5, 6, 8, 10 oder mehr Innenleiter 1e, wobei jeder Innenleiter 1e von einem eigenen Dielektrikum 1d umgeben ist. Die Dielektrika 1d sind dann gemeinsam von der Schirmfolie 1c umgeben. Ein solcher Aufbau erlaubt einen höheren Datensatz, insbesondere, wenn ein differentielles Signal wie beispielsweise LVDS (engl. low voltage differential signalling) verwendet wird.

Wie einleitend erwähnt, ist es das Ziel dieser Erfindung, die geschirmte Leitung 1 möglichst vollautomatisch zu konfektionieren, also mit einem Steckverbinder versehen zu können. Hierzu müssen bestimmte Schichten freigelegt und entsprechend bearbeitet werden, in die unterschiedliche Teile einer nicht dargestellten Steckverbindung eingreifen und diese elektrisch kontaktieren. In Rahmen dieser Erfindung wird eine geschirmte Leitung 1 bearbeitet, bei welcher die Schirmdrähte 1b freigelegt sind. Das Ziel dieser Erfindung ist es dabei, die Schirmdrähte 1b auf eine bestimmte Länge sicher zu kürzen.

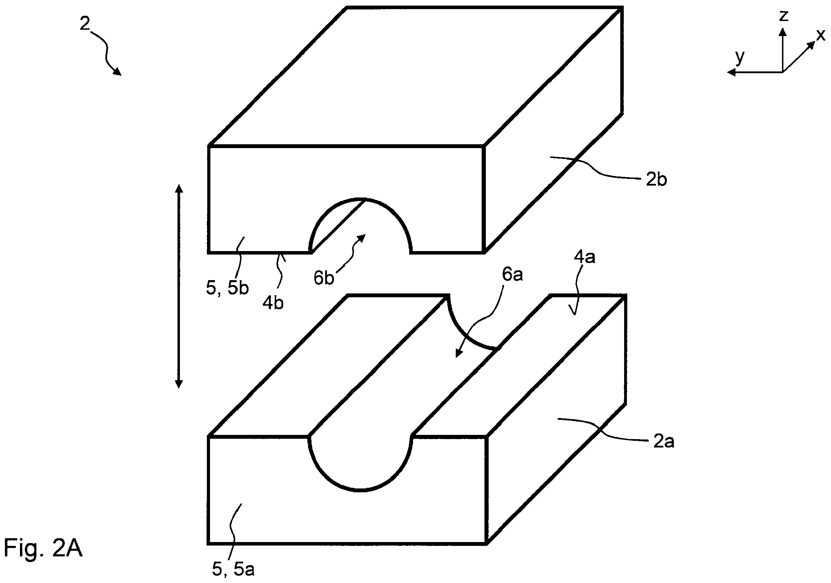

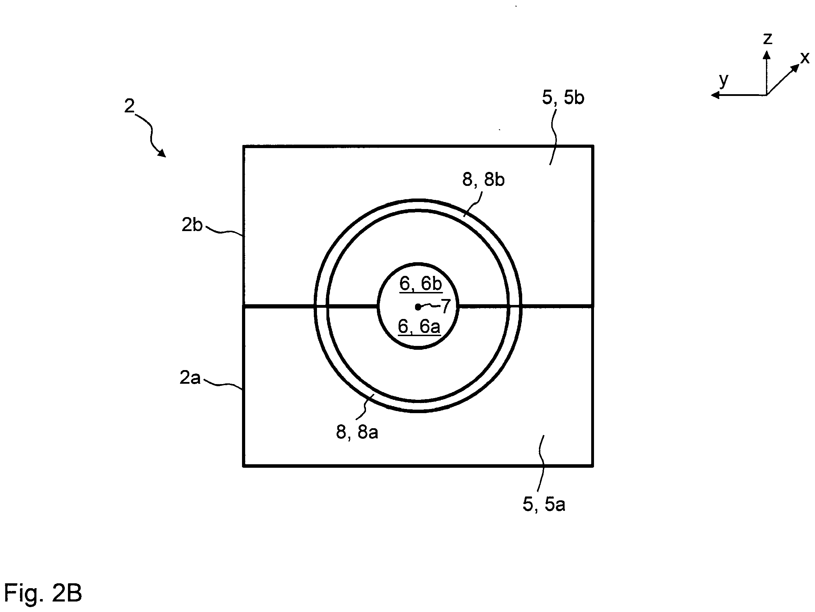

Wie eingangs erwähnt, wird die geschirmte Leitung hierfür in einer Spannvorrichtung 2 eingeklemmt. Eine solche Spannvorrichtung 2 wird im Hinblick auf die Figuren 2A und 2B genauer beschrieben.

Die Spannvorrichtung 2 umfasst zumindest eine erste Spannbacke 2a und eine zweite Spannbacke 2b, wobei die geschirmte Leitung 1, bei welcher die Schirmdrähte 1b über eine Teillänge der Leitung 1 bereits freigelegt sind, zwischen der zumindest einen ersten und der zweiten Spannbacke 2a, 2b positionierbar, also anordenbar ist.

Die erste Spannbacke 2a umfasst eine Auflagefläche 4a und die zweite Spannbacke 2b umfasst eine Auflagefläche 4b, wobei die Auflagefläche 4a der ersten Spannbacke 2a mit der Auflagefläche 4b der zweiten Spannbacke 2b in einem Schließzustand in Kontakt ist (siehe Pfeil), wodurch die geschirmte Leitung 1 zwischen der ersten und der zweiten Spannbacke 2a, 2b eingeklemmt ist.

Die zumindest eine erste Spannbacke 2a umfasst eine Stirnseite 5a und die zweite Spannbacke 2b umfasst eine Stirnseite 5b. Durch diese zumindest beiden Stirnseiten 2a, 2b ist ein Stirnseitenbereich 5 der Spannvorrichtung 2 gebildet.

Die zumindest eine erste Spannbacke 2a und die zumindest eine zweite Spannbacke 2b umfassen in Figur 2A jeweils eine Klemmausnehmung 6a, 6b. Diese Klemmausnehmung 6a, 6b erstreckt sich entlang einer Zentralachse 7 bzw. die Spannvorrichtung 2 ist im Bereich der Klemmausnehmungen 6a, 6b von der Zentralachse 7 durchsetzt. Die zumindest eine erste Spannbacke 2a und/oder zweite Spannbacke 2b sind in diesem Fall über ihre vollständige Länge von der jeweiligen Klemmausnehmung 6a, 6b durchsetzt. Die gesamte Klemmausnehmung 6 (siehe Figur 2B) der Spannvorrichtung 2 hat im Schließzustand einen runden Querschnitt. Die Spannbacken 2a, 2b sind in diesem Fall identisch aufgebaut und haben dieselben Abmessungen. Auch die Klemmausnehmung 6a in der ersten Spannbacke 2a entspricht von der Form und den Abmessungen her der Klemmausnehmung 6b in der zweiten Spannbacke 2b. Die Klemmausnehmung 6a in der ersten Spannbacke 2a könnte sich von der Form und/oder den Abmessungen her auch von der Klemmausnehmung 6b in der zweiten Spannbacke 2b unterscheiden.

Die Auflagefläche 4a der ersten Spannbacke 2a und die Auflagefläche 4b der zweiten Spannbacke 2b verlaufen im Schließzustand radial zur Zentralachse 7. Dies bedeutet, dass eine im Schließzustand durch die Auflagefläche 4a, 4b der ersten und zweiten Spannbacke 2a, 2b verlaufende oder gelegte Ebene radial zur Zentralachse 7 verlaufend ausgebildet ist oder zu liegen kommt.

Die Auflageflächen 4a, 4b der ersten und zweiten Spannbacke 2a, 2b könnten allerdings auch derart angeordnet sein, dass diese nicht-radial zur Zentralachse 7 verlaufen (z.B. bei einer entsprechenden Neigung der Auflageflächen 4a, 4b bzw. unterschiedlicher Größe der Klemmausnehmungen 6a, 6b). Dies bedeutet, dass eine im Schließzustand durch die Auflagefläche 4a, 4b der ersten und zweiten Spannbacke 2a, 2b verlaufende oder gelegte Ebene nicht radial zur Zentralachse 7 verlaufend ausgebildet ist oder zu liegen kommt. Ergänzend oder alternativ ist es auch möglich, dass die Auflageflächen 4a, 4b der ersten und zweiten Spannbacke 2a, 2b gebogen sind oder mehrere Teilflächen umfassen, die winkelig zueinander verlaufen.

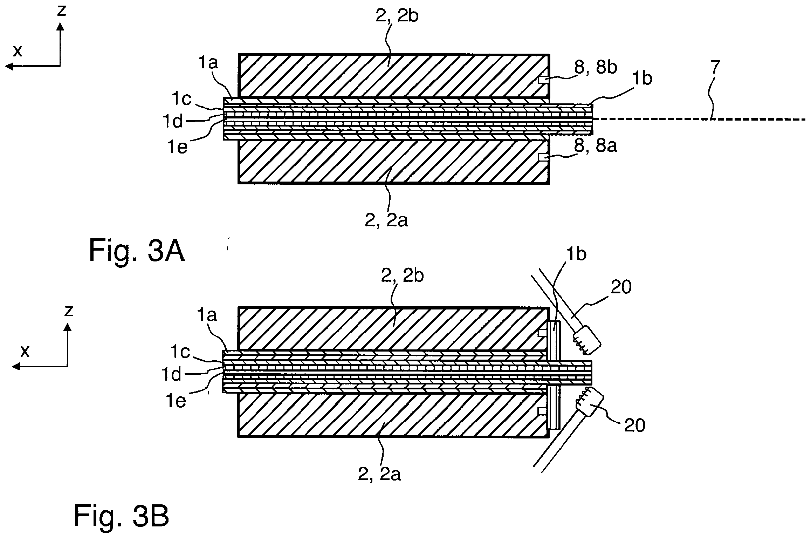

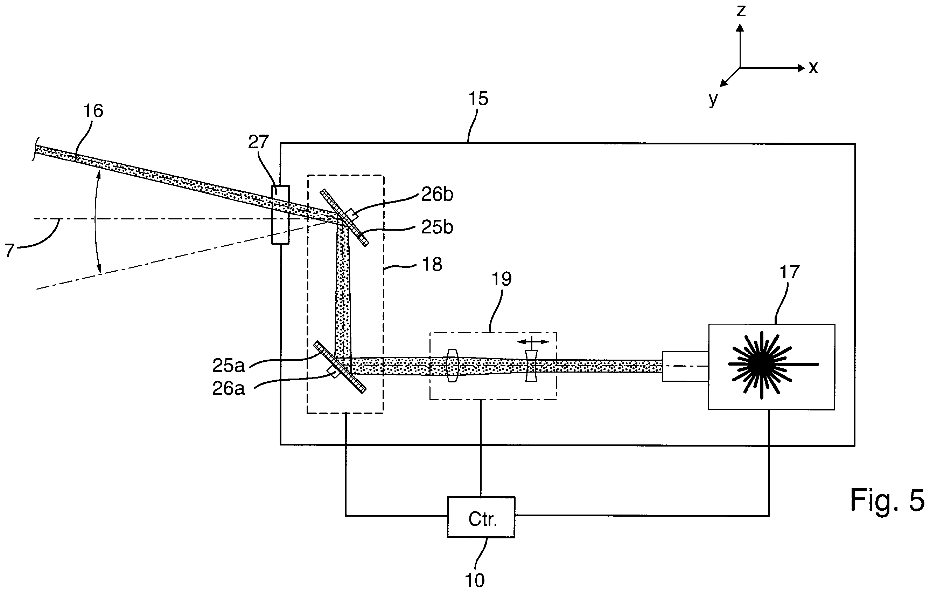

In Figur 2B ist eine Draufsicht auf den Stirnseitenbereich 5 der Spannvorrichtung 2 im Schließzustand der Spannvorrichtung 2 dargestellt. Die Spannvorrichtung 2 umfasst eine Laserstrahlabsorptionsnut 8. Die Laserstrahlabsorptionsnut 8 umgrenzt in Draufsicht auf den Stirnseitenbereich 5 der Spannvorrichtung 2 die gesamte Klemmausnehmung 6 (also beide einzelnen Klemmausnehmungen 6a, 6b), wobei die Laserstrahlabsorptionsnut 8 zumindest teilweise durch die aufgestellten Schirmdrähte 1b der geschirmten Leitung 1 verdeckbar ist (siehe Figur 3B). Eine Steuervorrichtung 10 ist dazu ausgebildet, eine Lasereinrichtung 15 derart anzusteuern, dass der Laserstrahl 16 (siehe Figur 5) in Richtung der Laserstrahlabsorptionsnut 8 strahlt, wodurch die Schirmdrähte 1b, die vor der Laserstrahlabsorptionsnut 8 angeordnet sind, in dem Bereich der Laserstrahlabsorptionsnut 8 geschnitten werden. Die Laserstrahlabsorptionsnut 8 ist in diesem Fall eine Ringnut. Die Laserstrahlabsorptionsnut 8 ist aus zwei Teilnuten 8a, 8b gebildet, wobei die erste Teilnut 8a in der Stirnseite 5a der ersten Spannbacke 2a eingebracht ist und wobei die zweite Teilnut 8b in die Stirnseite 5b der zweiten Spannbacke 2b eingebracht ist.

Das Innere der Laserstrahlabsorptionsnut 8 könnte noch entsprechend beschichtet sein, wobei in diesem Fall die Beschichtung überschüssige Energie des Laserstrahls 16 besonders gut absorbieren soll. Bei der Beschichtung kann es sich um eine galvanisch aufgebrachte Metallbeschichtung, wie z. B. aus Kupfer, Chrom, oder eine Keramik handeln. Alternativ oder ergänzend hierzu kann die Laserstrahlabsorptionsnut 8 bzw. der Nutboden der Laserstrahlabsorptionsnut 8 als austauschbares Verschleißteil ausgebildet sein.

Die geschirmte Leitung 1 ist in dem Schließzustand derart zwischen der ersten und der zweiten Spannbacke 2a, 2b positionierbar, dass die geschirmte Leitung 1 über die Stirnseite 5a der ersten Spannbacke 2a und über die Stirnseite 5b der zweiten Spannbacke 2b vorsteht, also übersteht. Dieser Sachverhalt ist in Figur 3A dargestellt. Derart vorbereitet wird die geschirmte Leitung 1 in die Spannvorrichtung 2 eingelegt.

In Figur 3B ist noch eine Aufstelleinrichtung 20 dargestellt. Diese ist dazu ausgebildet, um ausschließlich die Schirmdrähte 1b der geschirmten Leitung 1 aufzustellen (z.B. um ca. 90° hin zum Mantel der Leitung). Andere Schichten 1a, 1c, 1d, 1e der Leitung werden nicht beeinflusst. Die Aufstelleinrichtung 20 umfasst z.B. eine Bürsteneinrichtung, die in Kontakt zu den Schirmdrähten 1b der geschirmten Leitung 1 bringbar ist. Die Aufstelleinrichtung 20 kann innerhalb eines Schneideraums 21 angeordnet sein. Das Aufstellen der Schirmdrähte 1b erfolgt gemäß Figur 3B bevorzugt dann, wenn die geschirmte Leitung 1 bereits in der Spannvorrichtung 2 eingeklemmt ist. Das Aufstellen könnte auch davor erfolgen.

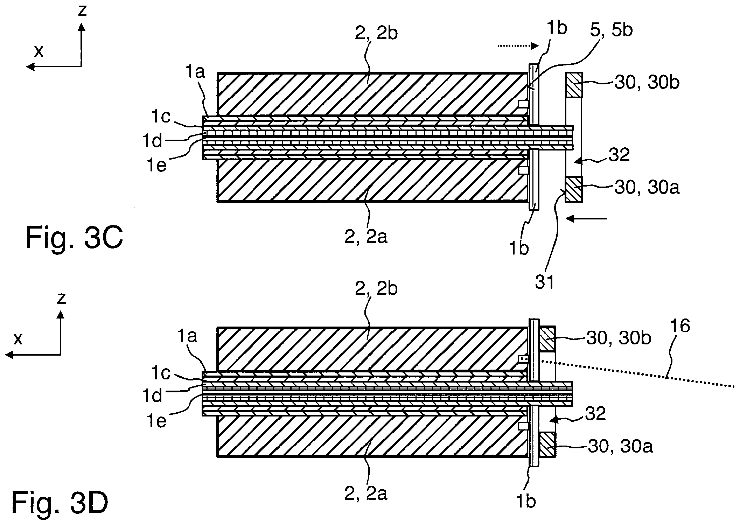

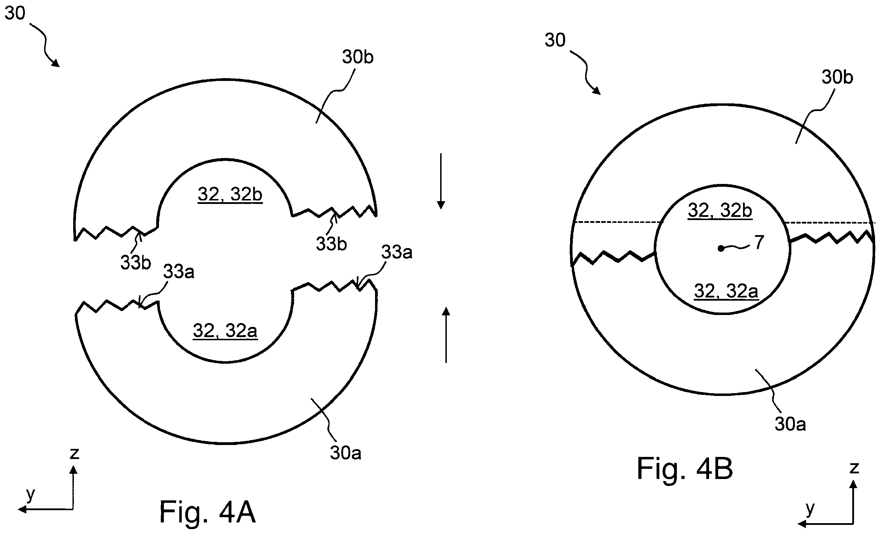

In den Figuren 3C und 3D ist noch der Einsatz einer Gegenspannvorrichtung 30 vorgesehen. Diese umfasst einen Auflagebereich 31 bzw. Anpressbereich und eine Laseröffnung 32. Eine Darstellung in Draufsicht auf den Auflagebereich 31 der Gegenspannvorrichtung 30 ist in den Figuren 4A und 4B dargestellt. Die Steuervorrichtung 10 ist dazu ausgebildet, um entweder die Gegenspannvorrichtung 30 derart anzusteuern, dass diese in Richtung des Stirnseitenbereichs 5 der Spannvorrichtung 2 verfahrbar ist (siehe durchgehender Pfeil in Figur 3C), wobei die aufgestellten Schirmdrähte 1b der geschirmten Leitung 1 zwischen dem Stirnseitenbereich 5 der Spannvorrichtung 2 und dem Auflagebereich 31 der Gegenspannvorrichtung 30 einklemmbar bzw. eingeklemmt sind (siehe Figur 3D). Ergänzend oder alternativ ist die Steuervorrichtung 10 auch dazu ausgebildet, um die Spannvorrichtung 2 derart anzusteuern, dass diese in Richtung des Auflagebereichs 31 der Gegenspannvorrichtung 30 verfahrbar ist (siehe gestrichelter Pfeil in Fig. 3C), um dadurch die aufgestellten Schirmdrähte 1b der geschirmten Leitung 1 zwischen dem Stirnseitenbereich 5 der Spannvorrichtung 2 und dem Auflagebereich 31 der Gegenspannvorrichtung 30 einzuklemmen.

Die Laseröffnung 32 der Gegenspannvorrichtung 30 umfasst einen derartigen Öffnungsquerschnitt, damit die geschirmte Leitung 1 diese Laseröffnung 32 durchsetzen kann.

In Draufsicht auf die Laseröffnung 32 der Gegenspannvorrichtung 30 entlang der Zentralachse 7 ist die Laserstrahlabsorptionsnut 8 durch die Laseröffnung 32 sichtbar.

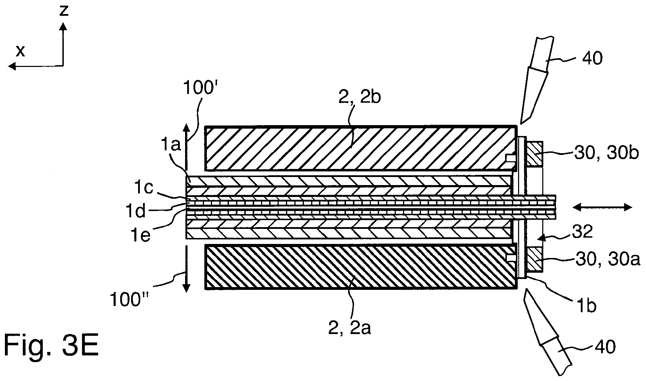

Die Steuervorrichtung 10 ist weiterhin dazu ausgebildet, die Lasereinrichtung 15 derart anzusteuern, dass der Laserstrahl 16 durch die Laseröffnung 32 der Gegenspannvorrichtung 30 strahlt bzw. trifft (siehe Figur 3D), wodurch die aufgestellten Schirmdrähte 1b der geschirmten Leitung 1 hinter der Laseröffnung 32 der Gegenspannvorrichtung 30 schneidbar sind, also die freien Enden der aufgestellten Schirmdrähte 1b abgeschnitten und damit die aufgestellten Schirmdrähte 1b entsprechend gekürzt werden können. Nach dem Schneiden verbleiben die abgeschnittenen Enden der Schirmdrähte 1b noch in ihrer Position (siehe Figur 3E) und können dann von dort über eine Absaugvorrichtung 40 ab- oder eingesaugt werden.

Gemäß dem Ausführungsbeispiel der Figuren 4A und 4B ist die Gegenspannvorrichtung 30 zweiteilig aufgebaut. Sie umfasst zumindest einen ersten Teil 30a und einen zweiten Teil 30b. Der zumindest eine erste Teil 30a der Gegenspannvorrichtung 30 umfasst Kontaktflächen 33a und der zumindest eine zweite Teil 30b der Gegenspannvorrichtung 30 umfasst Kontaktflächen 33b. Die Steuervorrichtung 10 ist dazu ausgebildet, die Gegenspannvorrichtung 30 derart anzusteuern, dass der zumindest eine erste Teil 30a und der zweite Teil 30b der Gegenspannvorrichtung 30 solange aufeinander zu bewegbar sind (siehe Pfeile in Figur 4A), bis sich die Kontaktflächen 33a des zumindest einen ersten Teils 30a und die Kontaktflächen 33b des zumindest einen zweiten Teils 30b in einem Schließzustand (siehe Figur 4B) der Gegenspannvorrichtung 30 berühren. Dadurch wird das Fixieren der Schirmdrähte 1b erleichtert.

Eine erster Teil 32a der Laseröffnung 32 ist in dem zumindest einen ersten Teil 30a der Gegenspannvorrichtung 30 ausgebildet und ein zweiter Teil 32b der Laseröffnung 32 in dem zweiten Teil 30b der Gegenspannvorrichtung 30. Die Laseröffnung 32 kann einen beliebigen Querschnitt aufweisen. In diesem Fall umfasst sie einen runden Querschnitt. Er könnte aber auch eckig oder oval sein.

Bevorzugt verläuft eine Ebene durch die Kontaktfläche 33a des ersten Teils 30a der Gegenspannvorrichtung 30 im Schließzustand nicht radial zur Zentralachse 7. Selbiges gilt auch für eine Ebene durch die Kontaktfläche 33b des zweiten Teils 30b der Gegenspannvorrichtung 30. Dieser Sachverhalt ist gestrichelt in Figur 4B dargestellt. Die Kontaktflächen 33a, 33b sind gestrichelt dargestellt. Eine durch diese Kontaktflächen 33a, 33b gelegte Ebene verläuft nicht radial zur Zentralachse 7. Zudem schneidet die Ebene die Zentralachse 7 nicht. Ergänzend oder alternativ könnte es auch sein, dass die Kontaktfläche 33a des ersten Teils 30a der Gegenspannvorrichtung 30 gebogen ist oder mehrere Teilflächen umfasst, die winkelig zueinander verlaufen (siehe Figuren 4A, 4B). Gleiches kann auch für die Kontaktfläche 33b des zweiten Teils 30b der Gegenspannvorrichtung 30 gelten. Dadurch wird verhindert, dass ein Schirmdraht 1b direkt entlang den Kontaktflächen 33a, 33b angeordnet ist, wodurch dieser nicht mehr richtig zwischen dem Stirnseitenbereich 5 der Spannvorrichtung 2 und dem Auflagebereich 31 der Gegenspannvorrichtung 30 fixierbar wäre.

Nach dem Schneiden der Schirmdrähte 1b (siehe Figur 3E) ist die Steuervorrichtung 10 insbesondere dazu ausgebildet, die Spannvorrichtung 2 derart anzusteuern, damit die zumindest eine erste und zweite Spannbacke 2a, 2b voneinander entfernt werden (siehe Pfeile 100', 100" in Figur 3E) und die geschnittene geschirmte Leitung 1 aus dem Schneideraum 21 entnehmbar ist. Dabei soll bevorzugt eine Anpresskraft zwischen der zumindest einen ersten und zweiten Spannbacke 2a, 2b hin zur Gegenspannvorrichtung 30 erhalten bleiben. Dadurch bleiben die abgeschnittenen Schirmdrähte 1b an Ort und Stelle in ihrem Klemmsitz und können nicht zusammen mit der Leitung 1 aus dem Schneideraum 21 entnommen werden, um spätere weitere Verfahrensschritte zu stören. Alternativ kann die Steuervorrichtung 10 die Gegenspannvorrichtung 30 auch derart ansteuern, dass der zumindest eine erste Teil 30a und der zweite Teil 30b der Gegenspannvorrichtung 30 voneinander entfernt werden, wobei bevorzugt eine Anpresskraft zwischen dem zumindest einen ersten und zweiten Teil der Gegenspannvorrichtung 30 hin zu dem Stirnseitenbereich 5 der Spannvorrichtung 2 erhalten bleibt. Es wäre auch möglich, dass die Anpresskraft bei der ersten und/oder zweiten Variante nicht aufrechterhalten bleibt, wobei die Schirmdrähte 1b dann unmittelbar abgesaugt werden. Hierfür ist in Figur 3E die Absaugvorrichtung 40 dargestellt.

Figur 5 zeigt einen beispielhaften Aufbau einer Lasereinrichtung 15. Diese Lasereinrichtung 15 erzeugt mittels einer Laserquelle 17 einen Laserstrahl 16. Damit der Laserstrahl 16 auf unterschiedliche Bereiche des Stirnseitenbereichs 5 der Spannvorrichtung 2 treffen kann, ist eine Laserstrahl-Umlenkvorrichtung 18 vorgesehen. Die Laserstrahl-Umlenkvorrichtung 18 ist dazu ausgebildet, den Laserstrahl 16 derart umzulenken, dass ein Auftreffpunkt (siehe Figur 3D) des Laserstrahls 16 auf den Stirnseitenbereich 5 der Spannvorrichtung 2 zumindest in einer Y-Z-Ebene bewegbar ist. Die Zentralachse 7, entlang welcher die geschirmte Leitung 1 angeordnet ist, verläuft dabei längs der X-Achse und senkrecht zur Y-Z-Ebene.

Der von der Laserquelle 17 erzeugte Laserstrahl 16 trifft auf die Laserstrahl-Umlenkvorrichtung 18. Die Laserstrahl-Umlenkvorrichtung 18 der Lasereinrichtung 15 umfasst zumindest eine erste Spiegelanordnung 25a und eine zweite Spiegelanordnung 25b, sowie zumindest eine erste Verstelleinrichtung 26a und eine zweite Verstelleinrichtung 26b. Die Spiegelanordnungen 25a, 25b sind im Strahlengang des Laserstrahls 16 angeordnet und dazu ausgebildet, den Laserstrahl 16 von der ersten Spiegelanordnung 25a zur zweiten Spiegelanordnung 25b zu reflektieren und von der zweiten Spiegelanordnung 25b oder letzten Spiegelanordnung auf den Stirnseitenbereich 5 der Spannvorrichtung 2. Die erste Verstelleinrichtung 26a ist dazu ausgebildet, die erste Spiegelanordnung 25a derart zu verdrehen und/oder zu verschwenken, dass der Laserstrahl 16 überwiegend oder ausschließlich entlang
a) der Y-Achse; oder
b) der Z-Achse
verstellt bzw. bewegt wird.

Die zweite Verstelleinrichtung 26b ist dazu ausgebildet, die zweite Spiegelanordnung 25b derart zu verdrehen und/oder zu verschwenken, dass der Laserstrahl 16 überwiegend oder ausschließlich entlang
a) der Z-Achse; oder
b) der Y-Achse
verstellt bzw. bewegt wird.

Die Y-Achse und die Z-Achse stehen in einem Winkel von 90° zueinander und in einem Winkel von 90° zur X-Achse, wobei die X-Achse parallel zu der Zentralachse 7 verläuft.

Es ist klar, dass für den Fall, dass der Laserstrahl 16 aus der Laserquelle 17 nicht parallel oder koaxial zur Zentralachse 7 austritt (z.B. weil die Lasereinrichtung 15 anders montiert, also ausgerichtet ist), sondern zum Beispiel senkrecht dazu, die Spiegelanordnungen 25a, 25b in einer anderen Achse den Laserstrahl 16 verschwenken. Grundsätzlich kann gesagt werden, dass jede Spiegelanordnung 25a, 25b den Laserstrahl 16 vorzugsweise genau entlang einer Achse verschwenkt. Grundsätzlich wäre es auch denkbar, dass eine Spiegelanordnung 25a, 25b den Laserstrahl 16 auch in Richtung von zwei Achsen verschwenken kann.

Die Lasereinrichtung 15 umfasst außerdem noch eine Teleskopeinrichtung 19. Diese Teleskopeinrichtung 19 ist dazu ausgebildet, die Fokussierung des Laserstrahls 16 zu ändern, wodurch auf einen sich veränderten Abstand zum Stirnseitenbereich 5 der Spannvorrichtung 2 eingegangen werden kann. Die Teleskopeinrichtung 19 ist vorzugsweise zwischen der Laserquelle 17 und der Laserstrahl-Umlenkvorrichtung 18 angeordnet.

Die Steuervorrichtung 10 ist dazu ausgebildet, die Lasereinrichtung 15 anzusteuern. Die Steuervorrichtung 10 steht dabei mit der Laserquelle 17, der Teleskopeinrichtung 19 und der Laserstrahl-Umlenkvorrichtung 18 in (Datenaustausch und kann diese entsprechend steuern. So ist die Steuervorrichtung 10 dazu ausgebildet, den Laserstrahl 16 durch Ansteuern der Laserstrahl-Umlenkvorrichtung 18 entsprechend abzulenken und den Laserstrahl 16 durch Ansteuern der Teleskopeinrichtung 19 entsprechend zu fokussieren. Außerdem ist die Steuervorrichtung 10 dazu ausgebildet, die Laserquelle 17 und damit die Lasereinrichtung 15 einzuschalten und auszuschalten.

Dargestellt ist ebenfalls noch eine Laseraustrittsöffnung 27, durch die der Laserstrahl 16 die Lasereinrichtung 15 verlässt. Die Laseraustrittsöffnung 27 kann, wie in Figur 5 dargestellt, noch durch ein entsprechendes Schutzglas verschlossen sein, um zu vermeiden, dass Partikel, die durch das Schneiden der geschirmten Leitung 1 entstehen, in das Innere der Lasereinrichtung 15 eindringen. Dieses Schutzglas sollte für den Wellenlängenbereich des Laserstrahls 16 transparent sein. Unter Transparenz wird insbesondere verstanden, dass mehr als 95%, 96%, 97%, 98% oder mehr als 99% der Leistung des Laserstrahls 16 durch das Schutzglas transmittiert werden.

Die Zentralachse 7 der Spannvorrichtung 2 verläuft bevorzugt durch die zweite bzw. letzte Spiegelanordnung 25b.

Die erste Spiegelanordnung 25a und die zweite Spiegelanordnung 25b sind lediglich in Y-Richtung oder in Z-Richtung oder in Z-Richtung und Y-Richtung versetzt zueinander angeordnet.

Im Hinblick auf die Figuren 3D und 6 ist dargestellt, dass die Laserstrahl-Umlenkvorrichtung 18 der Lasereinrichtung 15 dazu ausgebildet ist, den Laserstrahl 16 derart zu führen, dass der Laserstrahl 16 in Richtung der Zentralachse 7 oder überwiegend in Richtung (geneigt) der Zentralachse 7 auf den Stirnseitenbereich 5 der Spannvorrichtung 2 ausgerichtet ist und sich dort um 360° um die Zentralachse 7 herum bewegt, wodurch die radial abstehenden Schirmdrähte 1b der geschirmten Leitung 1 schneidbar sind.

Die Steuervorrichtung 10 ist vorzugsweise dazu ausgebildet, die Laserquelle 17 nur dann anzuschalten, wenn die Laserstrahl-Umlenkvorrichtung 18 derart angesteuert wurde, dass diese den Laserstrahl 16 auf den Stirnseitenbereich 5 der Spannvorrichtung 2 umlenkt.

Die Steuervorrichtung 10 ist weiter dazu ausgebildet, die Laserstrahl-Umlenkvorrichtung 18 der Lasereinrichtung 15 derart anzusteuern, dass der Laserstrahl 16 auf dem Stirnseitenbereich 5 der Spannvorrichtung 2 bevorzugt die Form der Laserstrahlabsorptionsnut 8 (falls vorhanden) nachfährt. Insbesondere beschreitet der Laserstrahl 16 auf dem Stirnseitenbereich 5 der Spannvorrichtung 2 eine Kreisbahn, durch deren Mittelpunkt die Zentralachse 7 verläuft. Dadurch ist sichergestellt, dass alle Schirmdrähte 1b auf die gleiche Länge abgeschnitten werden. Der Laserstrahl 16 könnte auf dem Stirnseitenbereich 5 der Spannvorrichtung 2 auch entlang eines Vielecks (z.B. Quadrat, Rechteck, Sechseck, usw.) oder eines Ovals geführt werden.

In Figur 6 ist eine Gehäuseanordnung 50 dargestellt, die einen Schneideraum 21 umgrenzt, wobei der Schneideraum 21 über eine Kabelaufnahmeöffnung 51 von außerhalb der Gehäuseanordnung 50 aus zugänglich ist. Die zu bearbeitende Leitung 1 wird dabei durch diese Kabeleinführöffnung 51 in den Schneideraum 21 eingeführt.

Die Spannvorrichtung 2 ist zumindest teilweise innerhalb des Schneideraums 21 angeordnet. Sie könnte auch vollständig innerhalb des Schneideraums 21 angeordnet sein. In Figur 6 sind die Schirmdrähte 1b der geschirmten Leitung 1 gerade radial von der geschirmten Leitung 1 nach außen hin aufgestellt und an den Stirnseitenbereich 5 der Spannvorrichtung 2 angelegt. Ein Laserstrahl 16 trifft in Figur 6 auf die Schirmdrähte 1b und schneidet diese. Die Spannvorrichtung 2 und eine Laserquelle 17 der Lasereinrichtung 15 sind während des Laserschneidens in diesem Fall relativ unverschiebbar zueinander und ortsfest angeordnet.

Es ist weiterhin eine Transport- und Haltevorrichtung 60 vorgesehen. Die Transport- und Haltevorrichtung 60 ist dazu ausgebildet, die Spannvorrichtung 2 oder direkt die geschirmte Leitung 1 zu halten und durch die Kabeleinführöffnung 51 in den Schneideraum 21 zu fahren. In dem dargestellt Ausführungsbeispiel hält die Transport- und Haltevorrichtung 60 die Spannvorrichtung 2. Die geschirmte Leitung 1 wird in diesem Fall außerhalb der Gehäuseanordnung 50 in die Spannvorrichtung 2 eingelegt und in dieser verklemmt.

Der Aufbau könnte allerdings auch ein anderer sein. Die Steuervorrichtung 10 könnte auch dazu ausgebildet sein, die Transport- und Haltevorrichtung 60 derart anzusteuern, dass diese die geschirmte Leitung 1 über die Kabeleinführöffnung 51 in den Schneideraum 21 einführt und zwischen die zumindest eine erste und zweite Spannbacke 2a, 2b positioniert. In diesem Fall wäre die Steuervorrichtung 10 weiter dazu ausgebildet, die Spannvorrichtung 2 derart anzusteuern, dass diese die zumindest eine erste und zweite Spannbacke 2a 2b schließt, wodurch die geschirmte Leitung 1 zwischen der zumindest einen ersten und zweiten Spannbacke 2a, 2b verklemmbar ist. In diesem Fall wäre die Spannvorrichtung 2 vorzugsweise entlang der Zentralachse 7 unverschieblich.

Die Transport- und Haltevorrichtung 60 umfasst eine Verbreiterung 61, wobei diese Verbreiterung 61 während des Laserschneidens an der Kabeleinführöffnung 51 anliegt und diese lichtdicht und/oder staubdicht und/oder luftdicht verschließt.

Zwischen der Verbreiterung 61 und der ersten Stirnseite 52 der Gehäuseanordnung 50 kann auch noch ein Dichtelement 53, beispielsweise in Form eines O-Rings (z.B. aus einem Gummi) angeordnet sein. Dieses Dichtelement 53 dient auch noch zum Dämpfen einer etwaigen Anschlagbewegung der Verbreiterung 61 an die erste Stirnseite 52.

Die Gegenspannvorrichtung 30 ist zweiteilig aufgebaut. Sie umfasst einen ersten Teil 30a und einen zweiten Teil 30b, die aufeinander zu und voneinander weg bewegbar sind (siehe Pfeile in Figur 6). Der Laserstrahl 16 tritt in Figur 6 durch die Laseröffnung der Gegenspannvorrichtung 30 durch, trifft auf die aufgestellten Schirmdrähte 1b und schneidet diese an dem Bereich, an welchem diese die Laserstrahlabsorptionsnut 8 überdecken.

Die Gegenspannvorrichtung 30 ist in Figur 6 in Richtung des Stirnseitenbereichs 5 (Fig. 2A, B) der Spannvorrichtung 2 verfahrbar. Die Gegenspannvorrichtung 30 könnte entlang der Zentralachse 7 auch unverschieblich sein.

Die aufgestellten Schirmdrähte 1b der geschirmten Leitung 1 sind zwischen dem Stirnseitenbereich 5 der Spannvorrichtung 2 und dem Auflagebereich 31 der Gegenspannvorrichtung 30 eingeklemmt und für den Schneidevorgang fixiert.

Dargestellt ist ebenfalls, dass die Steuervorrichtung 10 auch dazu ausgebildet ist, um die Spannvorrichtung 2 derart anzusteuern, dass diese in Richtung des Auflagebereichs 31 der Gegenspannvorrichtung 30 verfahrbar ist (siehe horizontaler Pfeil 105), um dadurch die aufgestellten Schirmdrähte 1b der geschirmten Leitung 1 zwischen dem Stirnseitenbereich 5 der Spannvorrichtung 2 und dem Auflagebereich 31 der Gegenspannvorrichtung 30 einzuklemmen.

In Figur 6 ist ebenfalls eine Düseneinrichtung 70 dargestellt, die in dem Schneideraum 21 angeordnet ist. Die Düseneinrichtung 70 umfasst zumindest eine Düse 71 und ist dazu ausgebildet, aus dieser Luft oder ein Prozessgas in den Schneideraum 21 zu blasen.

Die zumindest eine Düse 71 der Düseneinrichtung 70 weist eine Hauptdüsenaustrittsöffnung 72 und mehrere Nebendüsenaustrittsöffnungen 73 auf, wobei die Hauptdüsenaustrittsöffnung 72 derart angeordnet ist, dass Luft oder das Prozessgas auf den Stirnseitenbereich 5 der Spannvorrichtung 2 strömt und wobei die Nebendüsenaustrittsöffnungen 73 derart angeordnet sind, dass Luft oder das Prozessgas auf eine Innenwandung 54 der Gehäuseanordnung 50 strömt. Es kann eine Vielzahl von Düsen 71 geben, die vorzugsweise um die Zentralachse 7 herum beabstandet angeordnet sind.

Es ist eine Absaugvorrichtung 40 wie in Figur 3E (in Figur 6 nicht dargestellt) vorgesehen, die ein oder mehrere Absaugöffnungen aufweist, wobei die Absaugvorrichtung 40 dazu ausgebildet ist, die durch die Düseneinrichtung 50 zugeführte Luft oder das zugeführte Prozessgas und die durch den Laserschneideprozess entstehenden Emissionen und/oder abgeschnittenen Teile der geschirmten Leitung 1 einzusaugen.

Die Laserquelle 17 bzw. die Lasereinrichtung 15 kann außerhalb der Gehäuseanordnung 50 angeordnet sein. Über eine entsprechende Öffnung in einer Wand der Gehäuseanordnung 50 kann der Laserstrahl 16 dann dem Schneideraum 21 zugeführt werden.

Die Gehäuseanordnung hat eine Höhe (Z-Achse) von vorzugsweise weniger als 100cm oder weniger als 70cm und/oder eine Breite (Y-Achse) von vorzugsweise weniger als 100cm oder weniger als 70cm und/oder eine Tiefe (X-Achse) von vorzugsweise weniger als 100cm oder weniger als 70cm.

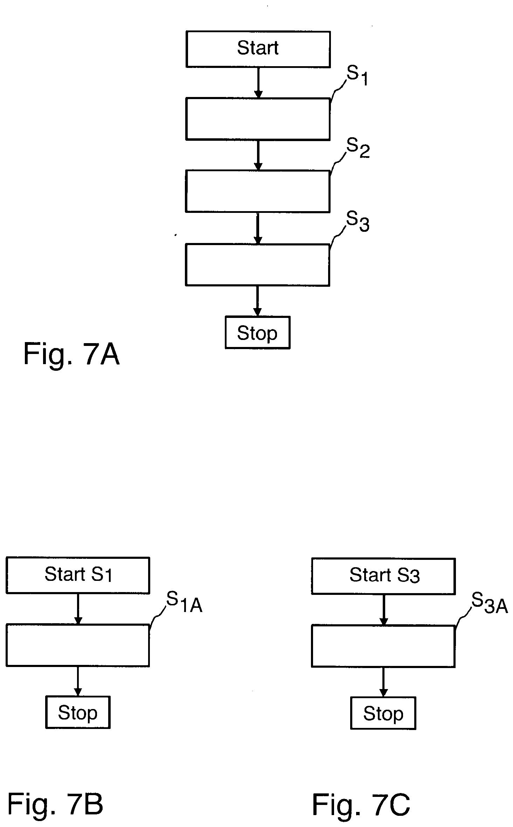

Die Figuren 7A bis 7C zeigen verschiedene Ablaufdiagramme, die ein erfindungsgemäßes Verfahren zum Laserschneiden von geschirmten Leitungen 1 näher erläutern.

In Figur 7A werden in einem ersten Verfahrensschritt S₁ die geschirmte zu schneidende Leitung 1 in die Spannvorrichtung 2 eingelegt und die Schirmdrähte 1b der geschirmten Leitung 1 aufgestellt.

Im Anschluss daran wird der zweite Verfahrensschritt S₂ ausgeführt. In dem zweiten Verfahrensschritt S₂ wird die Lasereinrichtung 15 derart angesteuert, dass der Laserstrahl 16 auf die aufgestellten Schirmdrähte 1b an dem Stirnseitenbereich 5 der Spannvorrichtung 2 trifft.

Im Anschluss daran wird der dritte Verfahrensschritt S₃ ausgeführt, in welchem der Laserstrahl 16 (permanent) derart geführt wird, so dass der Laserstrahl 16 die Schirmdrähte 1b der geschirmten Leitung 1 auf eine bestimmte Länge abschneidet und damit kürzt. Bevorzugt wird der Laserstrahl 16 derart geführt, dass der Laserstrahl 16 auf den Stirnseitenbereich 5 der Spannvorrichtung 2 trifft und auf diesem Stirnseitenbereich 5 um 360° (z.B. auf einer Kreisbahn) um die Zentralachse 7 herum bewegt wird, wodurch die radial abstehenden Schirmdrähte 1b der geschirmten Leitung 1 schneidbar sind.

In Figur 7B wird weiterhin erläutert, dass nach dem Verfahrensschritt S₁ noch der Verfahrensschritt S_{1A} ausgeführt wird. In dem Verfahrensschritt S_{1A} wird die Spannvorrichtung 2 in Richtung einer Gegenspannvorrichtung 30 verfahren. Ergänzend oder alternativ wird die Gegenspannvorrichtung 30 in Richtung der Spannvorrichtung 2 verfahren.

In Figur 7C wird weiterhin erläutert, dass nach dem Verfahrensschritt S₃ noch der Verfahrensschritt S_{3A} ausgeführt wird. In dem Verfahrensschritt S_{3A} wird die Spannvorrichtung 2 geöffnet und die geschnittene geschirmte Leitung 1 entnommen, wobei ein Anpressdruck zwischen der Spannvorrichtung 2 und der Gegenspannvorrichtung 30 erhalten bleibt. Der Anpressdruck könnte auch reduziert oder aufgehoben werden, wobei in diesem Fall die abgeschnittenen Schirmdrähte 1b eingesaugt werden sollten oder müssten.

Alternativ wäre es auch möglich, dass die Gegenspannvorrichtung 30 geöffnet wird, wobei ein Anpressdruck zwischen der Spannvorrichtung 2 und der Gegenspannvorrichtung 30 erhalten bleibt. Der Anpressdruck könnte auch reduziert oder aufgehoben werden, wobei in diesem Fall die abgeschnittenen Schirmdrähte 1b eingesaugt werden müssten. Anschließend wird die Spannvorrichtung 2 geöffnet und die geschnittene Leitung 1 herausgenommen. Das Öffnen könnte auch gleichzeitig erfolgen oder die Spannvorrichtung 2 könnte vor der Gegenspannvorrichtung 30 geöffnet werden.

Grundsätzlich ist auch eine entsprechende geschnittene geschirmte Leitung 1 geschützt, wie sie durch die hier dargestellten Verfahrensschritte herstellbar ist.

Nachfolgend wird nochmals ein Vorteil gesondert hervorgehoben, der durch die erfindungsgemäße Laserschneidevorrichtung 3 für geschirmte Leitungen 1 erzielt wird.

Ein besonderes Ausführungsbeispiel der erfindungsgemäßen Laserschneidevorrichtung 3 für geschirmte Leitungen 1 umfasst die folgenden Merkmale:
- es ist eine Transport- und Haltevorrichtung 60 vorgesehen;
- die Transport- und Haltevorrichtung 60 ist dazu ausgebildet, die Spannvorrichtung 2 zu halten;
- die Steuervorrichtung 10 ist dazu ausgebildet, die Lasereinrichtung 15 zu aktivieren, und:
   a) die Steuervorrichtung 10 ist weiter dazu ausgebildet, die Transport- und Haltevorrichtung 60 derart anzusteuern, dass diese die Spannvorrichtung 2 um die Zentralachse 7 herum dreht, sodass die radial oder mit radialer Komponente abstehenden Schirmdrähte 1b der geschirmten Leitung 1 durch den Laserstrahl 16 schneidbar sind;
      oder
   b) es ist eine Drehvorrichtung vorgesehen, wobei die Lasereinrichtung 15 an der Drehvorrichtung angeordnet ist und wobei die Steuervorrichtung 10 dazu ausgebildet ist, die Drehvorrichtung derart anzusteuern, dass diese die Lasereinrichtung 15 beabstandet zur Zentralachse 7 herum dreht, so dass die radial abstehenden Schirmdrähte 1b der geschirmten Leitung 1 durch den Laserstrahl 16 schneidbar sind.

Insbesondere würde in der ersten Alternative dieses Ausführungsbeispiels die Laserstrahl-Umlenkvorrichtung 18 den Laserstrahl 16 auf einen ortsfesten Punkt projetzieren. Durch das Drehen der Spannvorrichtung 2 um die Zentralachse 7 herum werden die Schirmdrähte 1b der geschirmten Leitung entsprechend geschnitten. In diesem Fall würde die Laserstrahl-Umlenkvorrichtung 18 nur dazu verwendet werden, um die Position des Laserstrahls 16 auf dem Stirnseitenbereich 5 der Spannvorrichtung 2 einzustellen. Gleichermaßen könnte man hierzu auch den Laserstrahl 16 direkt nach der Teleskopeinrichtung 19 nutzen und zwar ohne Verwendung der Laserstrahl-Umlenkvorrichtung 18. Die Laserquelle 17 einschließlich der Teleskopeinrichtung 19 könnten z.B. über ein Achssystem entsprechend positioniert werden.

Die Erfindung ist nicht auf die beschriebenen Ausführungsbeispiele beschränkt. Im Rahmen der beigefügten Ansprüche sind alle beschriebenen und/oder gezeichneten Merkmale beliebig miteinander kombinierbar.

## Patentansprüche

1. Laserschneidevorrichtung (3) zum Laserschneiden von Schirmdrähten (1b) für geschirmte Leitungen (1) mit den folgenden Merkmalen:
- es ist zumindest eine Lasereinrichtung (15) vorgesehen, die dazu ausgebildet ist, einen Laserstrahl (16) zu erzeugen;
- es ist eine Spannvorrichtung (2) vorgesehen, die von einer Zentralachse (7) durchsetzt ist, wobei die geschirmte Leitung (1) durch die Spannvorrichtung (2) haltbar ist;
- die geschirmte Leitung (1) ist in einem Schließzustand der Spannvorrichtung (2) derart in der Spannvorrichtung (2) positionierbar, dass die geschirmte Leitung (1) über einen Stirnseitenbereich (5) der Spannvorrichtung (2) vorsteht, wobei die Schirmdrähte (1b) radial oder mit radialer Komponente von der geschirmten Leitung (1) nach außen hin aufstellbar und an dem Stirnseitenbereich (5) der Spannvorrichtung (2) anlegbar sind;
- es ist eine Steuervorrichtung (10) vorgesehen, die dazu ausgebildet ist, die Lasereinrichtung (15) derart anzusteuern, dass der Laserstrahl (16) auf den Stirnseitenbereich (5) der Spannvorrichtung (2) strahlt, wodurch die aufgestellten Schirmdrähte (1b) der geschirmten Leitung (1) im Schneideraum (21) schneidbar sind,
**gekennzeichnet durch** die folgenden Merkmale:
- es ist eine Gehäuseanordnung (50) vorgesehen, die einen Schneideraum (21) umgrenzt, der über eine Kabelaufnahmeöffnung (51) aus zugänglich ist;
- es ist eine Gegenspannvorrichtung (30) vorgesehen;
- die Gegenspannvorrichtung (30) umfasst einen Auflagebereich (31) und eine Laseröffnung (32);
- die Steuervorrichtung (10) ist dazu ausgebildet:
a) die Gegenspannvorrichtung (30) derart anzusteuern, dass diese in Richtung des Stirnseitenbereichs (5) der Spannvorrichtung (2) verfahrbar ist, wobei die aufgestellten Schirmdrähte (1b) der geschirmten Leitung (1) zwischen dem Stirnseitenbereich (5) der Spannvorrichtung (2) und dem Auflagebereich (31) der Gegenspannvorrichtung (30) eingeklemmt und für den Schneidevorgang fixiert sind; und/oder
b) die Spannvorrichtung (2) derart anzusteuern, dass diese in Richtung des Auflagebereichs (31) der Gegenspannvorrichtung (30) verfahrbar ist, wobei die aufgestellten Schirmdrähte (1b) der geschirmten Leitung (1) zwischen dem Stirnseitenbereich (5) der Spannvorrichtung (2) und dem Auflagebereich (31) der Gegenspannvorrichtung (30) eingeklemmt und für den Schneidevorgang fixiert sind;
- die Steuervorrichtung (10) ist dazu ausgebildet, die Lasereinrichtung (15) derart anzusteuern, dass der Laserstrahl (16) durch die Laseröffnung (32) strahlt, wodurch die aufgestellten Schirmdrähte (1b) der geschirmten Leitung (1) hinter der Laseröffnung (32) schneidbar sind.

2. Laserschneidevorrichtung (3) nach Anspruch 1, **gekennzeichnet durch** die folgenden Merkmale:
- die Spannvorrichtung (2) umfasst zumindest eine erste und eine zweite Spannbacke (2a, 2b), wobei die geschirmte Leitung (1) zwischen der ersten und der zweiten Spannbacke (2a, 2b) positionierbar ist;
- die erste Spannbacke (2a) umfasst eine Auflagefläche (4a) und die zweite Spannbacke (2b) umfasst eine Auflagefläche (4b), wobei die Auflagefläche (4a) der ersten Spannbacke (2a) mit der Auflagefläche (4b) der zweiten Spannbacke (2b) im Schließzustand in Kontakt bringbar ist, wodurch die geschirmte Leitung (1) zwischen der ersten und der zweiten Spannbacke (2a, 2b) einklemmbar ist;
- die erste Spannbacke (2a) umfasst eine Stirnseite (5a) und die zweite Spannbacke (2b) umfasst eine Stirnseite (5b), wobei durch diese Stirnseiten (5a, 5b) der Stirnseitenbereich (5) der Spannvorrichtung (2) gebildet ist.

3. Laserschneidevorrichtung (3) nach Anspruch 1 oder 2, **gekennzeichnet durch** die folgenden Merkmale:
- die Spannvorrichtung (2) umfasst eine Klemmausnehmung (6, 6a, 6b);
- die Klemmausnehmung (6, 6a, 6b) erstreckt sich entlang der Zentralachse (7);
- die geschirmte Leitung (1) ist innerhalb der Klemmausnehmung (6, 6a, 6b) anordenbar.

4. Laserschneidevorrichtung (3) nach Anspruch 3, **gekennzeichnet durch** die folgenden Merkmale:
- die Spannvorrichtung (2) umfasst eine Laserstrahlabsorptionsnut (8);
- die Laserstrahlabsorptionsnut (8) umgrenzt in Draufsicht auf den Stirnseitenbereich (5) der Spannvorrichtung (2) die Klemmausnehmung (6, 6a, 6b), wobei die Laserstrahlabsorptionsnut (8) zumindest teilweise durch die aufgestellten Schirmdrähte (1b) der geschirmten Leitung (1) verdeckbar ist;
- die Steuervorrichtung (10) ist dazu ausgebildet, die Lasereinrichtung (15) derart anzusteuern, dass der Laserstrahl (16) in Richtung der Laserstrahlabsorptionsnut (8) strahlt, wodurch die Schirmdrähte (1b) der geschirmten Leitung (1) lediglich in dem Bereich vor der Laserstrahlabsorptionsnut (8) schneidbar sind.

5. Laserschneidevorrichtung (3) nach einem der vorherigen Ansprüche,
**gekennzeichnet durch** das folgende Merkmal:
- in Draufsicht auf die Laseröffnung (32) der Gegenspannvorrichtung (30) entlang der Zentralachse (7) ist die Laserstrahlabsorptionsnut (8) durch die Laseröffnung (32) sichtbar.

6. Laserschneidevorrichtung (3) nach einem der Ansprüche 1 bis 5, **gekennzeichnet durch** das folgende Merkmal:
- es ist eine elastische Klemmleisteneinrichtung vorgesehen, die zwischen dem Auflagebereich (31) der Gegenspannvorrichtung (30) und dem Stirnseitenbereich (5) der Spannvorrichtung (2) angeordnet ist, wobei die aufgestellten Schirmdrähte (1b) mit der elastischen Klemmleisteneinrichtung in Kontakt bringbar sind.

7. Laserschneidevorrichtung (3) nach Anspruch 6, **gekennzeichnet durch** die folgenden Merkmale:
- die elastische Klemmleisteneinrichtung ist an dem Auflagebereich (31) der Gegenspannvorrichtung (30) angeordnet und umgrenzt die Laseröffnung (32); und/oder
- die elastische Klemmleisteneinrichtung ist an dem Stirnseitenbereich (5) der Spannvorrichtung (2) angeordnet.

8. Laserschneidevorrichtung (3) nach einem der Ansprüche 1 bis 7, **gekennzeichnet durch** das folgende Merkmal:
- die Laseröffnung (32) der Gegenspannvorrichtung (30) umfasst einen derartigen Öffnungsquerschnitt, dass die Laseröffnung (32) von der geschirmten Leitung (1) durchsetzbar ist.

9. Laserschneidevorrichtung (3) nach einem der Ansprüche 1 bis 8, **gekennzeichnet durch** die folgenden Merkmale:
- die Gegenspannvorrichtung (30) ist zumindest zweiteilig aufgebaut mit zumindest einem ersten Teil (30a) und einem zweiten Teil (30b);
- der zumindest eine erste Teil (30a) der Gegenspannvorrichtung (30) umfasst Kontaktflächen (33a) und der zumindest eine zweite Teil (30b) der Gegenspannvorrichtung (30) umfasst Kontaktflächen (33b);
- die Steuervorrichtung (10) ist dazu ausgebildet, die Gegenspannvorrichtung (30) derart anzusteuern, dass der zumindest eine erste Teil (30a) und der zweite Teil (30b) der Gegenspannvorrichtung (30) solange aufeinander zu bewegbar sind, bis die Kontaktflächen (33a) des zumindest einen ersten Teils (30a) die Kontaktflächen (33b) des zumindest einen zweiten Teils (30b) in einem Schließzustand der Gegenspannvorrichtung (30) berühren.

10. Laserschneidevorrichtung (3) nach Anspruch 9, **gekennzeichnet durch** die folgenden Merkmale:
- eine Ebene durch die Kontaktfläche (33a) des ersten Teils (30a) der Gegenspannvorrichtung (30) verläuft im Schließzustand nicht radial zur Zentralachse (7) und eine Ebene durch die Kontaktfläche (33b) des zweiten Teils (30b) der Gegenspannvorrichtung (30) verläuft im Schließzustand nicht radial zur Zentralachse (7); und/oder
- die Kontaktfläche (33a) des ersten Teils (30a) der Gegenspannvorrichtung (30):
a) ist gebogen; oder
b) umfasst mehrere Teilflächen, die winkelig zueinander verlaufen; und
die Kontaktfläche (33b) des zweiten Teils (30b) der Gegenspannvorrichtung (30):
a) ist gebogen; oder
b) umfasst mehrere Teilflächen, die winkelig zueinander verlaufen.

11. Laserschneidevorrichtung (3) nach Anspruch 2 **gekennzeichnet durch** das folgende Merkmal:
- die Steuervorrichtung (10) ist dazu ausgebildet, um nach Abschluss des Schneidens der Schirmdrähte (1b) der geschirmten Leitung (1) die Spannvorrichtung (2) derart anzusteuern, dass die zumindest eine erste und zweite Spannbacke (2a, 2b) voneinander entfernt werden und die Leitung (1) aus dem Schneideraum (21) entnehmbar ist.

12. Laserschneidevorrichtung (3) nach einem der Ansprüche 9 oder 10, **gekennzeichnet durch** das folgende Merkmal:
- die Steuervorrichtung (10) ist dazu ausgebildet, um nach Abschluss des Schneidens der Schirmdrähte (1b) der geschirmten Leitung (1) die Gegenspannvorrichtung (30) derart anzusteuern, dass der zumindest eine erste Teil (30a) und der zweite Teil (30b) voneinander entfernt werden.

13. Laserschneidevorrichtung (3) nach einem der vorherigen Ansprüche, **gekennzeichnet durch** die folgenden Merkmale:
- es ist eine Aufstelleinrichtung (20) vorgesehen;
- die Aufstelleinrichtung (20) ist dazu ausgebildet, um die Schirmdrähte (1b) der geschirmten Leitung (1) aufzustellen.

14. Laserschneidevorrichtung (3) nach Anspruch 13, **gekennzeichnet durch** die folgenden Merkmale:
- die Aufstelleinrichtung (20) umfasst eine Bürsteneinrichtung, die in Kontakt zu den Schirmdrähten (1b) der geschirmten Leitung (1) bringbar ist; und/oder
- die Aufstelleinrichtung (20) ist innerhalb des Schneideraums (21) angeordnet und dazu ausgebildet, die Schirmdrähte (1b), der in der Spannvorrichtung (2) eingeklemmten Leitung (1), aufzustellen.

15. Laserschneidevorrichtung (3) nach einem der vorherigen Ansprüche, **gekennzeichnet durch** das folgende Merkmal:
- die Lasereinrichtung (15) umfasst eine Laserstrahl-Umlenkvorrichtung (18), die dazu ausgebildet ist, den Laserstrahl (16) derart zu führen, so dass der Laserstrahl (16) in Richtung der Zentralachse (7) oder überwiegend in Richtung der Zentralachse (7) auf dem Stirnseitenbereich (5) der Spannvorrichtung (2) ausgerichtet ist und sich dort um 360° um die Zentralachse (7) herum bewegt, wodurch die radial abstehenden Schirmdrähte (1b) der geschirmten Leitung (1) schneidbar sind.

16. Laserschneidevorrichtung (3) nach Anspruch 15, **gekennzeichnet durch** das folgende Merkmal:
- die Steuervorrichtung (10) ist dazu ausgebildet, die Laserstrahl-Umlenkvorrichtung (18) der Lasereinrichtung (15) derart anzusteuern, dass der Laserstrahl (16) auf dem Stirnseitenbereich (5) der Spannvorrichtung (2) eine Kreisbahn beschreitet.

17. Laserschneidevorrichtung (3) nach Anspruch 15 oder 16, **gekennzeichnet durch** die folgenden Merkmale:
- die Laserstrahl-Umlenkvorrichtung (18) umfasst zumindest eine erste Spiegelanordnung (25a) und eine zweite Spiegelanordnung (25b), sowie zumindest eine erste Verstelleinrichtung (26a) und eine zweite Verstelleinrichtung (26b);
- die Spiegelanordnungen (25a, 25b) sind im Strahlengang des Laserstrahls (16) angeordnet und dazu ausgebildet, den Laserstrahl (16) von der ersten Spiegelanordnung (25a) zur zweiten Spiegelanordnung (25b) und von der zweiten Spiegelanordnung (25b) oder letzten Spiegelanordnung (25b) zum Stirnseitenbereich (5) der Spannvorrichtung (2) zu reflektieren;
- die erste Verstelleinrichtung (26a) ist dazu ausgebildet, die erste Spiegelanordnung (25a) derart zu verdrehen und/oder zu verschwenken, dass der Laserstrahl (16) überwiegend oder ausschließlich entlang
a) der Y-Achse; oder
b) der Z-Achse
verstellt bzw. bewegt wird;
- die zweite Verstelleinrichtung (26b) ist dazu ausgebildet, die zweite Spiegelanordnung (25b) derart zu verdrehen und/oder zu verschwenken, dass der Laserstrahl (16) überwiegend oder ausschließlich entlang
a) der Z-Achse; oder
b) der Y-Achse
verstellt bzw. bewegt wird,
- die Y-Achse und die Z-Achse stehen in einem Winkel von 90° zueinander und in einem Winkel von 90° zur X-Achse, wobei die X-Achse entlang der Zentralachse (7) verläuft.

18. Laserschneidevorrichtung (3) nach Anspruch 17, **gekennzeichnet durch** das folgende Merkmal:
- die Zentralachse (7) der Spannvorrichtung (2) verläuft durch die zweite Spiegelanordnung (25b) oder letzte Spiegelanordnung (25b).

19. Laserschneidevorrichtung (3) nach Anspruch 17 oder 18, **gekennzeichnet durch** das folgende Merkmal:
- die erste Spiegelanordnung (25a) und die zweite Spiegelanordnung (25b) sind lediglich in
a) Y-Richtung; oder
b) Z-Richtung; oder
c) Z-Richtung und Y-Richtung;
versetzt zueinander angeordnet.

20. Laserschneidevorrichtung (3) nach einem der Ansprüche 15 bis 19, **gekennzeichnet durch** das folgende Merkmal:
- die Laserstrahl-Umlenkvorrichtung (18) ist dazu ausgebildet, den Laserstrahl (16) derart zu führen, dass sich der Laserstrahl (16) mehr als 2, 3, 4, 5, 6, 7, 8, 9, 10, 15, 20, 25 oder mehr als 30 Mal in der Sekunde entlang einer Bahn auf dem Stirnseitenbereich (5) der Spannvorrichtung (2) um 360° um die Zentralachse (7) herum bewegt.

21. Laserschneidevorrichtung (3) nach einem der Ansprüche 15 bis 20, **gekennzeichnet durch** die folgenden Merkmale:
- die Lasereinrichtung (15) umfasst eine Teleskopeinrichtung (19);
- die Teleskopeinrichtung (19) der Lasereinrichtung (15) ist zwischen einer Laserquelle (17) der Lasereinrichtung (15) und der Laserstrahl-Umlenkvorrichtung (18) der Lasereinrichtung (15) angeordnet und dazu ausgebildet, die Fokussierung des Laserstrahls (16) zu ändern.

22. Laserschneidevorrichtung (3) nach einem der vorherigen Ansprüche, **gekennzeichnet durch,** die folgenden Merkmale:
- die Spannvorrichtung (2) und eine Laserquelle (17) der Lasereinrichtung (15) sind während des Laserschneidens:
a) relativ unverschiebbar zueinander; und/oder
b) ortsfest
angeordnet.

23. Laserschneidevorrichtung (3) nach einem der vorherigen Ansprüche, **gekennzeichnet durch,** die folgenden Merkmale:
- es ist eine Düseneinrichtung (70) vorgesehen, die in dem Schneideraum (21) angeordnet ist;
- die Düseneinrichtung (70) umfasst zumindest eine Düse (71) und ist dazu ausgebildet, aus dieser Luft oder ein Prozessgas in den Schneideraum (21) zu blasen;
- es ist eine Absaugvorrichtung (40) vorgesehen, die ein oder mehrere Absaugöffnungen aufweist, wobei die Absaugvorrichtung (40) dazu ausgebildet ist, die durch die Düseneinrichtung (70) zugeführte Luft oder das zugeführte Prozessgas und die durch den Laserschneideprozess entstehenden Emissionen und/oder abgeschnittenen Teile der geschirmten Leitung (1) einzusaugen.

24. Laserschneidevorrichtung (3) nach Anspruch 23, **gekennzeichnet durch** das folgende Merkmal:
- die zumindest eine Düse (71) der Düseneinrichtung (70) weist eine Hauptdüsenaustrittsöffnung (72) und mehrere Nebendüsenaustrittsöffnungen (73) auf, wobei die Hauptdüsenaustrittsöffnung (72) derart angeordnet ist, dass Luft oder das Prozessgas auf den Stirnseitenbereich (5) der Spannvorrichtung (2) strömt und wobei die Nebendüsenaustrittsöffnungen (73) derart angeordnet sind, dass Luft oder das Prozessgas auf eine Innenwandung (54) der Gehäuseanordnung (50) strömt.

25. Laserschneidevorrichtung (3) nach einem der vorherigen Ansprüche oder nach Anspruch 2, **gekennzeichnet durch** die folgenden Merkmale:
- es ist eine Transport- und Haltevorrichtung (60) vorgesehen; und
a) die Transport- und Haltevorrichtung (60) ist dazu ausgebildet, die Spannvorrichtung (2) oder die geschirmte Leitung (1) zu halten und durch die Kabeleinführöffnung (51) in den Schneideraum (21) zu fahren;
oder
b) die Steuervorrichtung (10) ist dazu ausgebildet, die Transport- und Haltevorrichtung (60) derart anzusteuern, dass diese die geschirmte Leitung (1) über die Kabeleinführöffnung (51) in den Schneideraum (21) einführt und zwischen der zumindest einen ersten und zweiten Spannbacke (2a, 2b) positioniert und die Steuervorrichtung (10) ist weiter dazu ausgebildet, die Spannvorrichtung (2) derart anzusteuern, dass diese die zumindest eine erste und zweite Spannbacke (2a, 2b) aufeinander zu bewegt, wodurch die geschirmte Leitung (1) zwischen der zumindest einen ersten und zweiten Spannbacke (2a, 2b) verklemmbar ist.

26. Laserschneidevorrichtung (3) nach Anspruch 25, **gekennzeichnet durch** das folgende Merkmal:
- die Transport- und Haltevorrichtung (60) umfasst eine Verbreiterung (61), wobei diese Verbreiterung (61) während des Laserschneidens an der Kabeleinführöffnung (51) anliegt und diese lichtdicht und/oder staubdicht und/oder luftdicht verschließt.

27. Laserschneidevorrichtung (3) nach einem der vorherigen Ansprüche, **gekennzeichnet durch** das folgende Merkmal:
- die Zentralachse (7) verläuft fluchtend mit einer Längsachse der geschirmten Leitung (1), die in die Spannvorrichtung (2) einklemmbar ist.

28. Laserschneidevorrichtung (3) nach einem der vorherigen Ansprüche, **gekennzeichnet durch** die folgenden Merkmale:
- es ist eine Transport- und Haltevorrichtung (60) vorgesehen;
- die Transport- und Haltevorrichtung (60) ist dazu ausgebildet, die Spannvorrichtung (2) zu halten;
- die Steuervorrichtung (10) ist dazu ausgebildet, die Lasereinrichtung (15) zu aktivieren, und:
a) die Steuervorrichtung (10) ist weiter dazu ausgebildet, die Transport- und Haltevorrichtung (60) derart anzusteuern, dass diese die Spannvorrichtung (2) um die Zentralachse (7) herum dreht, sodass die radial oder mit radialer Komponente abstehenden Schirmdrähte (1b) der geschirmten Leitung (1) durch den Laserstrahl (16) schneidbar sind;
oder
b) es ist eine Drehvorrichtung vorgesehen, wobei die Lasereinrichtung (15) an der Drehvorrichtung angeordnet ist und wobei die Steuervorrichtung (10) dazu ausgebildet ist, die Drehvorrichtung derart anzusteuern, dass diese die Lasereinrichtung (15) beabstandet zur Zentralachse (7) herum dreht, so dass die radial abstehenden Schirmdrähte (1b) der geschirmten Leitung (1) durch den Laserstrahl (16) schneidbar sind.

29. Verfahren zum Laserschneiden von geschirmten Leitungen (1) mit einer Laserschneidevorrichtung (3) gemäß einem der vorherigen Ansprüche, **gekennzeichnet durch** die folgenden Verfahrensschritte:
- Einlegen der geschirmten Leitung (1) in die Spannvorrichtung (2) und Aufstellen (S₁) der Schirmdrähte (1b) der geschirmten Leitung (1);
- Ansteuern (S₂) der Lasereinrichtung (15) derart, dass der Laserstrahl (16) auf die aufgestellten Schirmdrähte (1b) an dem Stirnseitenbereich (5) der Spannvorrichtung (2) trifft; und
- Führen (S₃) des Laserstrahls (16), so dass der Laserstrahl (16) die Schirmdrähte (1b) der geschirmten Leitung (1) kürzt und vorzugsweise auf eine bestimmte oder vorgebbare Länge abschneidet, weiter **gekennzeichnet durch** die folgenden Merkmale:
- nach dem Verfahrensschritt S₁ wird der folgende Verfahrensschritt S_{1A} ausgeführt:
i) Verfahren der Spannvorrichtung (2) in Richtung der Gegenspannvorrichtung (30) und/oder Verfahren der Gegenspannvorrichtung (30) in Richtung der Spannvorrichtung (2);
und/oder
- nach dem Verfahrensschritt S₃ wird der folgende Verfahrensschritt S_{3A} aufgeführt:
i) Öffnen der Spannvorrichtung (2) und Entfernen der geschnittenen geschirmten Leitung (1); oder
ii) Öffnen der Gegenspannvorrichtung (30) und Öffnen der Spannvorrichtung (2) und Entfernen der geschnittenen Leitung (1).

## Claims

1. Laser-cutting apparatus (3) for laser-cutting of shielding wires (1b) for shielded lines (1), having the following features:
- provision is made of at least one laser device (15) which is configured to produce a laser beam (16);
- provision is made of a clamping apparatus (2) through which a central axis (7) passes, wherein the shielded line (1) is able to be held by the clamping apparatus (2);
- in a closed state of the clamping apparatus (2), the shielded line (1) is able to be positioned in the clamping apparatus (2) in such a way that the shielded line (1) projects beyond an end-face region (5) of the clamping apparatus (2), wherein the shielding wires (1b) are able to be turned up from the shielded line (1) outwards in a radial direction, or with a radial component, and are able to be positioned against the end-face region (5) of the clamping apparatus (2);
- provision is made of a control apparatus (10) which is configured to control the laser device (15) in such a way that the laser beam (16) radiates onto the end-face region (5) of the clamping device (2), whereby the turned-up shielding wires (1b) of the shielded line (1) are able to be cut in the cutting chamber (21),
**characterized by** the following features:
- provision is made of a housing arrangement (50) which surrounds a cutting chamber (21) which is accessible via a cable receiving opening (51);
- provision is made of a counterpart clamping apparatus (30);
- the counterpart clamping apparatus (30) comprises a bearing region (31) and a laser opening (32);
- the control apparatus (10) is configured:
a) to control the counterpart clamping apparatus (30) in such a way that the latter is movable in the direction of the end-face region (5) of the clamping apparatus (2), wherein the turned-up shielding wires (1b) of the shielded line (1) are clamped between the end-face region (5) of the clamping apparatus (2) and the bearing region (31) of the counterpart clamping apparatus (30) and are fixed therebetween for the cutting operation; and/or
b) to control the clamping apparatus (2) in such a way that the latter is movable in the direction of the bearing region (31) of the counterpart clamping apparatus (30), wherein the turned-up shielding wires (1b) of the shielded line (1) are clamped between the end-face region (5) of the clamping apparatus (2) and the bearing region (31) of the counterpart clamping apparatus (30) and are fixed therebetween for the cutting operation;
- the control apparatus (10) is configured to control the laser device (15) in such a way that the laser beam (16) radiates through the laser opening (32), whereby the turned-up shielding wires (1b) of the shielded line (1) are able to be cut behind the laser opening (32).

2. Laser-cutting apparatus (3) according to Claim 1, **characterized by** the following features:
- the clamping apparatus (2) comprises at least one first and one second clamping jaw (2a, 2b), wherein the shielded line (1) is able to be positioned between the first and second clamping jaws (2a, 2b);
- the first clamping jaw (2a) comprises a bearing surface (4a) and the second clamping jaw (2b) comprises a bearing surface (4b), wherein the bearing surface (4a) of the first clamping jaw (2a) is able to be brought into contact with the bearing surface (4b) of the second clamping jaw (2b) in the closed state, whereby the shielded line (1) is able to be clamped between the first and second clamping jaws (2a, 2b);
- the first clamping jaw (2a) comprises an end face (5a) and the second clamping jaw (2b) comprises an end face (5b), wherein the end-face region (5) of the clamping apparatus (2) is formed by said end faces (5a, 5b).

3. Laser-cutting apparatus (3) according to Claim 1 or 2, **characterized by** the following features:
- the clamping apparatus (2) comprises a clamping recess (6, 6a, 6b);
- the clamping recess (6, 6a, 6b) extends along the central axis (7);
- the shielded line (1) is arrangeable within the clamping recess (6, 6a, 6b).

4. Laser-cutting apparatus (3) according to Claim 3, **characterized by** the following features:
- the clamping apparatus (2) comprises a laser-beam-absorption groove (8);
- the clamping recess (6, 6a, 6b) is bounded by the laser-beam-absorption groove (8) in a plan view of the end-face region (5) of the clamping apparatus (2), wherein the laser-beam-absorption groove (8) is able to be concealed at least partially by the turned-up shielding wires (1b) of the shielded line (1) ;
- the control apparatus (10) is configured to control the laser device (15) in such a way that the laser beam (16) radiates in the direction of the laser-beam-absorption groove (8), whereby the shielding wires (1b) of the shielded line (1) are able to be cut only in the region in front of the laser-beam-absorption groove (8).

5. Laser-cutting apparatus (3) according to one of the preceding claims, **characterized by** the following feature:
- the laser-beam-absorption groove (8) is visible through the laser opening (32) in a plan view of the laser opening (32) of the counterpart clamping apparatus (30) along the central axis (7).

6. Laser-cutting apparatus (3) according to one of Claims 1 to 5, **characterized by** the following feature:
- provision is made of an elastic clamping-strip device which is arranged between the bearing region (31) of the counterpart clamping apparatus (30) and the end-face region (5) of the clamping apparatus (2), wherein the turned-up shielding wires (1b) are able to be brought into contact with the elastic clamping-strip device.

7. Laser-cutting apparatus (3) according to Claim 6, **characterized by** the following features:
- the elastic clamping-strip device is arranged on the bearing region (31) of the counterpart clamping apparatus (30) and the laser opening (32) is bounded by it; and/or
- the elastic clamping-strip device is arranged on the end-face region (5) of the clamping apparatus (2).

8. Laser-cutting apparatus (3) according to one of Claims 1 to 7, **characterized by** the following feature:
- the laser opening (32) of the counterpart clamping apparatus (30) comprises such an opening cross section that the laser opening (32) is able to be passed through by the shielded line (1).

9. Laser-cutting apparatus (3) according to one of Claims 1 to 8, **characterized by** the following features:
- the counterpart clamping apparatus (30) is of at least two-part construction, having at least one first part (30a) and one second part (30b);
- the at least one first part (30a) of the counterpart clamping apparatus (30) comprises contact surfaces (33a), and the at least one second part (30b) of the counterpart clamping apparatus (30) comprises contact surfaces (33b);
- the control apparatus (10) is configured to control the counterpart clamping apparatus (30) in such a way that the at least one first part (30a) and the second part (30b) of the counterpart clamping apparatus (30) are movable towards one another until the contact surfaces (33a) of the at least one first part (30a) are in contact with the contact surfaces (33b) of the at least one second part (30b) in a closed state of the counterpart clamping apparatus (30) .

10. Laser-cutting apparatus (3) according to Claim 9, **characterized by** the following features:
- a plane through the contact surface (33a) of the first part (30a) of the counterpart clamping apparatus (30) does not extend radially in relation to the central axis (7) in the closed state, and a plane through the contact surface (33b) of the second part (30b) of the counterpart clamping apparatus (30) does not extend radially in relation to the central axis (7) in the closed state; and/or
- the contact surface (33a) of the first part (30a) of the counterpart clamping apparatus (30):
a) is bent; or
b) comprises multiple part-surfaces which extend at an angle to one another; and
the contact surface (33b) of the second part (30b) of the counterpart clamping apparatus (30):
a) is bent; or
b) comprises multiple part-surfaces which extend at an angle to one another.

11. Laser-cutting apparatus (3) according to Claim 2, **characterized by** the following feature:
- the control apparatus (10) is configured such that, after completion of the cutting of the shielding wires (1b) of the shielded line (1), it controls the clamping apparatus (2) in such a way that the at least one first and second clamping jaws (2a, 2b) are moved apart from one another and the line (1) is able to be removed from the cutting chamber (21).

12. Laser-cutting apparatus (3) according to either of Claims 9 and 10, **characterized by** the following feature:
- the control apparatus (10) is configured such that, after completion of the cutting of the shielding wires (1b) of the shielded line (1), it controls the counterpart clamping apparatus (30) in such a way that the at least one first part (30a) and the second part (30b) are moved apart from one another.

13. Laser-cutting apparatus (3) according to one of the preceding claims, **characterized by** the following features:
- provision is made of a turning-up device (20);
- the turning-up device (20) is configured to turn up the shielding wires (1b) of the shielded line (1).

14. Laser-cutting apparatus (3) according to Claim 13, **characterized by** the following features:
- the turning-up device (20) comprises a brush device which is able to be brought into contact with the shielding wires (1b) of the shielded line (1); and/or
- the turning-up device (20) is arranged within the cutting chamber (21) and is configured to turn up the shielding wires (1b) of the line (1) that is clamped in the clamping apparatus (2).

15. Laser-cutting apparatus (3) according to one of the preceding claims, **characterized by** the following feature:
- the laser device (15) comprises a laser-beam-deflecting apparatus (18) which is configured to guide the laser beam (16) in such a way that the laser beam (16) is oriented in the direction of the central axis (7) or predominantly in the direction of the central axis (7) on the end-face region (5) of the clamping apparatus (2) and, there, moves about the central axis (7) through 360°, whereby the radially protruding shielding wires (1b) of the shielded line (1) are able to be cut.

16. Laser-cutting apparatus (3) according to Claim 15, **characterized by** the following feature:
- the control apparatus (10) is configured to control the laser-beam-deflecting apparatus (18) of the laser device (15) in such a way that the laser beam (16) follows a circular path on the end-face region (5) of the clamping apparatus (2).

17. Laser-cutting apparatus (3) according to Claim 15 or 16, **characterized by** the following features:
- the laser-beam-deflecting apparatus (18) comprises at least one first mirror arrangement (25a) and one second mirror arrangement (25b), and also at least one first adjustment device (26a) and one second adjustment device (26b);
- the mirror arrangements (25a, 25b) are arranged in the beam path of the laser beam (16) and are configured to reflect the laser beam (16) from the first mirror arrangement (25a) to the second mirror arrangement (25b) and from the second mirror arrangement (25b) or last mirror arrangement (25b) to the end-face region (5) of the clamping apparatus (2) ;
- the first adjustment device (26a) is configured to rotate and/or to pivot the first mirror arrangement (25a) in such a way that the laser beam (16) is adjusted or moved predominantly or exclusively along
a) the Y-axis; or
b) the Z-axis;
- the second adjustment device (26b) is configured to rotate and/or to pivot the second mirror arrangement (25b) in such a way that the laser beam (16) is adjusted or moved predominantly or exclusively along
a) the Z-axis; or
b) the Y-axis;
- the Y-axis and the Z-axis are at an angle of 90° to one another and at an angle of 90° to the X-axis, wherein the X-axis extends along the central axis (7) .

18. Laser-cutting apparatus (3) according to Claim 17, **characterized by** the following feature:
- the central axis (7) of the clamping apparatus (2) extends through the second mirror arrangement (25b) or last mirror arrangement (25b).

19. Laser-cutting apparatus (3) according to Claim 17 or 18, **characterized by** the following feature:
- the first mirror arrangement (25a) and the second mirror arrangement (25b) are arranged offset from one another only in the
a) Y direction; or
b) Z direction; or
c) Z direction and Y direction.

20. Laser-cutting apparatus (3) according to one of Claims 15 to 19, **characterized by** the following feature:
- the laser-beam-deflecting apparatus (18) is configured to guide the laser beam (16) in such a way that the laser beam (16) moves along a path on the end-face region (5) of the clamping apparatus (2) about the central axis (7) through 360° more than 2, 3, 4, 5, 6, 7, 8, 9, 10, 15, 20, 25 or more than 30 times per second.

21. Laser-cutting apparatus (3) according to one of Claims 15 to 20, **characterized by** the following features:
- the laser device (15) comprises a telescopic device (19) ;
- the telescopic device (19) of the laser device (15) is arranged between a laser source (17) of the laser device (15) and the laser-beam-deflecting apparatus (18) of the laser device (15) and is configured to change the focusing of the laser beam (16).

22. Laser-cutting apparatus (3) according to one of the preceding claims, **characterized by** the following features:
- during the laser cutting, the clamping apparatus (2) and a laser source (17) of the laser device (15) are arranged:
a) relatively non-displaceably with respect to one another; and/or
b) positionally fixed.

23. Laser-cutting apparatus (3) according to one of the preceding claims, **characterized by** the following features:
- provision is made of a nozzle device (70) which is arranged in the cutting chamber (21);
- the nozzle device (70) comprises at least one nozzle (71) and is configured to blow air or a process gas therefrom into the cutting chamber (21);
- provision is made of a suction-extraction apparatus (40) which has one or more suction-extraction openings, wherein the suction-extraction apparatus (40) is configured to suck in the air fed by way of the nozzle device (70) or the fed process gas and the emissions arising from the laser-cutting process and/or cut-off parts of the shielded line (1).

24. Laser-cutting apparatus (3) according to Claim 23, **characterized by** the following feature:
- the at least one nozzle (71) of the nozzle device (70) has a main nozzle-exit opening (72) and multiple secondary nozzle-exit openings (73), wherein the main nozzle-exit opening (72) is arranged in such a way that air or the process gas flows onto the end-face region (5) of the clamping apparatus (2), and wherein the secondary nozzle-exit openings (73) are arranged in such a way that air or the process gas flows onto an inner wall (54) of the housing arrangement (50).

25. Laser-cutting apparatus (3) according to one of the preceding claims or according to Claim 2, **characterized by** the following features:
- provision is made of a transporting and holding apparatus (60); and
a) the transporting and holding apparatus (60) is configured to hold, and to move through the cable entry opening (51) into the cutting chamber (21), the clamping apparatus (2) or the shielded line (1) ;
or
b) the control apparatus (10) is configured to control the transporting and holding apparatus (60) in such a way that it introduces the shielded line (1) into the cutting chamber (21) via the cable entry opening (51) and positions said shielded line between the at least one first and second clamping jaws (2a, 2b), and the control apparatus (10) is furthermore configured to control the clamping apparatus (2) in such a way that it moves the at least one first and second clamping jaws (2a, 2b) towards one another, whereby the shielded line (1) is able to be clamped between the at least one first and second clamping jaws (2a, 2b).

26. Laser-cutting apparatus (3) according to Claim 25, **characterized by** the following feature:
- the transporting and holding apparatus (60) comprises a widening (61), wherein said widening (61), during the laser cutting, bears against the cable entry opening (51) and closes off the latter in a light-tight and/or dust-tight and/or air-tight manner.

27. Laser-cutting apparatus (3) according to one of the preceding claims, **characterized by** the following feature:
- the central axis (7) extends so as to be aligned with a longitudinal axis of the shielded line (1) which is able to be clamped into the clamping apparatus (2).

28. Laser-cutting apparatus (3) according to one of the preceding claims, **characterized by** the following features:
- provision is made of a transporting and holding apparatus (60);
- the transporting and holding apparatus (60) is configured to hold the clamping apparatus (2);
- the control apparatus (10) is configured to activate the laser device (15), and:
a) the control apparatus (10) is furthermore configured to control the transporting and holding apparatus (60) in such a way that it rotates the clamping apparatus (2) about the central axis (7), so that the shielding wires (1b) of the shielded line (1) that protrude radially, or with a radial component, are able to be cut by the laser beam (16);
or
b) provision is made of a rotary apparatus, wherein the laser device (15) is arranged on the rotary apparatus, and wherein the control apparatus (10) is configured to control the rotary apparatus in such a way that it rotates the laser device (15) at a distance from the central axis (7), so that the radially protruding shielding wires (1b) of the shielded line (1) are able to be cut by the laser beam (16).

29. Method for laser-cutting of shielded lines (1) using a laser-cutting apparatus (3) according to one of the preceding claims, **characterized by** the following method steps:
- placing the shielded line (1) into the clamping apparatus (2) and turning up (S₁) the shielding wires (1b) of the shielded line (1);
- controlling (S₂) the laser device (15) in such a way that the laser beam (16) impinges on the turned-up shielding wires (1b) at the end-face region (5) of the clamping apparatus (2); and
- guiding (S₃) the laser beam (16) so that the laser beam (16) shortens the shielding wires (1b) of the shielded line (1) and preferably cuts them to a specific or predefinable length, furthermore **characterized by** the following features:
- after the method step S₁, the following method step S_{1A} is performed:
i) moving the clamping apparatus (2) in the direction of the counterpart clamping apparatus (30) and/or moving the counterpart clamping apparatus (30) in the direction of the clamping apparatus (2);
and/or
- after the method step S₃, the following method step S_{3A} is performed:
i) opening the clamping apparatus (2) and removing the cut shielded line (1); or
ii) opening the counterpart clamping apparatus (30) and opening the clamping apparatus (2) and removing the cut line (1).

## Revendications

1. Dispositif de découpe au laser (3) pour la découpe au laser de fils de blindage (1b) pour câbles blindés (1), comprenant les particularités suivantes :
- au moins un équipement laser (15) est prévu qui est réalisé pour générer un faisceau laser (16) ;
- un dispositif de serrage (2) est prévu qui est traversé par un axe central (7), le câble blindé (1) pouvant être tenu par le dispositif de serrage (2) ;
- le câble blindé (1) peut être positionné dans le dispositif de serrage (2) dans un état de fermeture du dispositif de serrage (2) de telle sorte que le câble blindé (1) dépasse d'une zone de face frontale (5) du dispositif de serrage (2), dans lequel les fils de blindage (1b) peuvent être relevés radialement ou avec une composante radiale du câble blindé (1) vers l'extérieur et peuvent être appliqués contre la zone de face frontale (5) du dispositif de serrage (2) ;
- un dispositif de commande (10) est prévu qui est réalisé pour piloter l'équipement laser (15) de telle sorte que le faisceau laser (16) rayonne sur la zone de face frontale (5) du dispositif de serrage (2) de sorte que les fils de blindage (1b) relevés du câble blindé (1) peuvent être découpés dans la chambre de découpe (21),
**caractérisé par** les particularités suivantes :
- un agencement de boîtier (50) est prévu qui délimite une chambre de découpe (21) qui est accessible par une ouverture de logement de câble (51) ;
- un dispositif de contre-serrage (30) est prévu ;
- le dispositif de contre-serrage (30) comprend une zone d'appui (31) et une ouverture de laser (32) ;
- le dispositif de commande (10) est réalisé pour :
a) piloter le dispositif de contre-serrage (30) de façon à pouvoir le déplacer en direction de la zone de face frontale (5) du dispositif de serrage (2), dans lequel les fils de blindage relevés (1b) du câble blindé (1) sont serrés et fixés pour l'opération de découpe entre la zone de face frontale (5) du dispositif de serrage (2) et la zone d'appui (31) du dispositif de contre-serrage (30) ; et/ou
b) piloter le dispositif de serrage (2) de façon à pouvoir le déplacer en direction de la zone d'appui (31) du dispositif de contre-serrage (30), dans lequel les fils de blindage relevés (1b) du câble blindé (1) sont serrés entre la zone de face frontale (5) du dispositif de serrage (2) et la zone d'appui (31) du dispositif de contre-serrage (30) et fixés pour l'opération de découpe ;
- le dispositif de commande (10) est réalisé pour piloter l'équipement laser (15) de telle sorte que le faisceau laser (16) rayonne à travers l'ouverture de laser (32) de sorte que les fils de blindage relevés (1b) du câble blindé (1) peuvent être découpés derrière l'ouverture de laser (32).

2. Dispositif de découpe au laser (3) selon la revendication 1, **caractérisé par** les particularités suivantes :
- le dispositif de serrage (2) comprend au moins une première et une deuxième mâchoire de serrage (2a, 2b), dans lequel le câble blindé (1) peut être positionné entre la première et la deuxième mâchoire de serrage (2a, 2b) ;
- la première mâchoire de serrage (2a) comprend une surface d'appui (4a) et la deuxième mâchoire de serrage (2b) comprend une surface d'appui (4b), dans lequel la surface d'appui (4a) de la première mâchoire de serrage (2a) peut être mise en contact avec la surface d'appui (4b) de la deuxième mâchoire de serrage (2b) à l'état de fermeture, de sorte que le câble blindé (1) peut être serré entre la première et la deuxième mâchoire de serrage (2a, 2b) ;
- la première mâchoire de serrage (2a) comprend une face frontale (5a) et la deuxième mâchoire de serrage (2b) comprend une face frontale (5b), ces faces frontales (5a, 5b) formant la zone de face frontale (5) du dispositif de serrage (2).

3. Dispositif de découpe au laser (3) selon la revendication 1 ou 2, **caractérisé par** les particularités suivantes :
- le dispositif de serrage (2) comprend un évidement de serrage (6, 6a, 6b) ;
- l'évidement de serrage (6, 6a, 6b) s'étend le long de l'axe central (7) ;
- le câble blindé (1) peut être disposé à l'intérieur de l'évidement de serrage (6, 6a, 6b).

4. Dispositif de découpe au laser (3) selon la revendication 3, **caractérisé par** les particularités suivantes :
- le dispositif de serrage (2) comprend une rainure d'absorption de faisceau laser (8) ;
- la rainure d'absorption de faisceau laser (8) délimite l'évidement de serrage (6, 6a, 6b) en vue de dessus sur la zone de face frontale (5) du dispositif de serrage (2), dans lequel la rainure d'absorption de faisceau laser (8) peut être recouverte au moins partiellement par les fils de blindage relevés (1b) du câble blindé (1) ;
- le dispositif de commande (10) est réalisé pour piloter l'équipement laser (15) de telle sorte que le faisceau laser (16) rayonne en direction de la rainure d'absorption de faisceau laser (8) de sorte que les fils de blindage (1b) du câble blindé (1) ne peuvent être découpés que dans la zone devant la rainure d'absorption de faisceau laser (8).

5. Dispositif de découpe au laser (3) selon l'une quelconque des revendications précédentes, **caractérisé par** la particularité suivante :
- en vue de dessus sur l'ouverture de laser (32) du dispositif de contre-serrage (30) le long de l'axe central (7), la rainure d'absorption de faisceau laser (8) est visible à travers l'ouverture de laser (32).

6. Dispositif de découpe au laser (3) selon l'une quelconque des revendications 1 à 5, **caractérisé par** la particularité suivante :
- un équipement de borne plate élastique est prévu qui est disposé entre la zone d'appui (31) du dispositif de contre-serrage (30) et la zone de face frontale (5) du dispositif de serrage (2), dans lequel les fils de blindage relevés (1b) peuvent être mis en contact avec l'équipement de borne plate élastique.

7. Dispositif de découpe au laser (3) selon la revendication 6, **caractérisé par** les particularités suivantes :
- l'équipement de borne plate élastique est disposé au niveau de la zone d'appui (31) du dispositif de contre-serrage (30) et délimite l'ouverture de laser (32) ; et/ou
- l'équipement de borne plate élastique est disposé au niveau de la zone de face frontale (5) du dispositif de serrage (2).

8. Dispositif de découpe au laser (3) selon l'une quelconque des revendications 1 à 7, **caractérisé par** la particularité suivante :
- l'ouverture de laser (32) du dispositif de contre-serrage (30) comprend une section transversale d'ouverture telle que l'ouverture de laser (32) peut être traversée par le câble blindé (1).

9. Dispositif de découpe au laser (3) selon l'une quelconque des revendications 1 à 8, **caractérisé par** les particularités suivantes :
- le dispositif de contre-serrage (30) est composé d'au moins deux parties, comprenant au moins une première partie (30a) et une deuxième partie (30b) ;
- ladite au moins une première partie (30a) du dispositif de contre-serrage (30) comprend des surfaces de contact (33a), et ladite au moins une deuxième partie (30b) du dispositif de contre-serrage (30) comprend des surfaces de contact (33b) ;
- le dispositif de commande (10) est réalisé pour piloter le dispositif de contre-serrage (30) de telle sorte que ladite au moins une première partie (30a) et la deuxième partie (30b) du dispositif de contre-serrage (30) peuvent être rapprochées l'une de l'autre jusqu'à ce que les surfaces de contact (33a) de ladite au moins une première partie (30a) touchent les surfaces de contact (33b) de ladite au moins une deuxième partie (30b) dans un état de fermeture du dispositif de contre-serrage (30).

10. Dispositif de découpe au laser (3) selon la revendication 9, **caractérisé par** les particularités suivantes :
- un plan à travers la surface de contact (33a) de la première partie (30a) du dispositif de contre-serrage (30) ne s'étend pas radialement à l'axe central (7) à l'état de fermeture, et un plan à travers la surface de contact (33b) de la deuxième partie (30b) du dispositif de contre-serrage (30) ne s'étend pas radialement à l'axe (7) à l'état de fermeture ; et/ou
- la surface de contact (33a) de la première partie (30a) du dispositif de contre-serrage (30) :
a) est courbe ; ou
b) comprend plusieurs surfaces partielles qui s'étendent selon un angle les unes par rapport aux autres ; et
la surface de contact (33b) de la deuxième partie (30b) du dispositif de contre-serrage (30) :
a) est courbe ; ou
b) comprend plusieurs surfaces partielles qui s'étendent selon un angle les unes par rapport aux autres.

11. Dispositif de découpe au laser (3) selon la revendication 2, **caractérisé par** la particularité suivante :
- le dispositif de commande (10) est réalisé pour piloter le dispositif de serrage (2) à l'issue de la découpe des fils de blindage (1b) du câble blindé (1) de telle sorte que ladite au moins une première et deuxième mâchoires de serrage (2a, 2b) sont écartées l'une de l'autre et la ligne (1) peut être retirée de la chambre de découpe (21).

12. Dispositif de découpe au laser (3) selon l'une quelconque des revendications 9 ou 10, **caractérisé par** la particularité suivante :
- le dispositif de commande (10) est réalisé pour piloter le dispositif de contre-serrage (30) à l'issue de la découpe des fils de blindage (1b) du câble blindé (1) de telle sorte que ladite au moins première partie (30a) et la deuxième partie (30b) sont écartées l'une de l'autre.

13. Dispositif de découpe au laser (3) selon l'une quelconque des revendications précédentes, **caractérisé par** les particularités suivantes :
- un équipement de relevage (20) est prévu ;
- l'équipement de relevage (20) est réalisé pour relever les fils de blindage (1b) du câble blindé (1).

14. Dispositif de découpe au laser (3) selon la revendication 13, **caractérisé par** les particularités suivantes :
- l'équipement de relevage (20) comprend un équipement à brosse qui peut être mis en contact avec les fils de blindage (1b) du câble blindé (1) ; et/ou
- l'équipement de relevage (20) est disposé à l'intérieur de la chambre de découpe (21) et est réalisé pour relever les fils de blindage (1b) du câble (1) serré dans le dispositif de serrage (2).

15. Dispositif de découpe au laser (3) selon l'une quelconque des revendications précédentes, **caractérisé par** la particularité suivante :
- l'équipement laser (15) comprend un équipement de déviation de faisceau laser (18) qui est réalisé pour guider le faisceau laser (16) de telle sorte que le faisceau laser (16) est aligné en direction de l'axe central (7) ou principalement en direction de l'axe central (7) sur la zone de face frontale (5) du dispositif de serrage (2) et s'y déplace de 360° autour de l'axe central (7) de sorte que les fils de blindage (1b) du câble blindé (1), faisant saillie radialement, peuvent être découpés.

16. Dispositif de découpe au laser (3) selon la revendication 15, **caractérisé par** la particularité suivante :
- le dispositif de commande (10) est réalisé pour piloter le dispositif de déviation de faisceau laser (18) de l'équipement laser (15) de telle sorte que le faisceau laser (16) décrit une trajectoire circulaire sur la zone de face frontale (5) du dispositif de serrage (2).

17. Dispositif de découpe au laser (3) selon la revendication 15 ou 16, **caractérisé par** les particularités suivantes :
- le dispositif de déviation de faisceau laser (18) comprend au moins un premier agencement de miroir (25a) et un deuxième agencement de miroir (25b), ainsi qu'au moins un premier équipement de réglage (26a) et un deuxième équipement de réglage (26b) ;
- les agencements de miroir (25a, 25b) sont disposés sur la trajectoire des rayons du faisceau laser (16) et sont réalisés pour réfléchir le faisceau laser (16) du premier agencement de miroir (25a) au deuxième agencement de miroir (25b) et du deuxième agencement de miroir (25b) ou du dernier agencement de miroir (25b) à la zone de face frontale (5) du dispositif de serrage (2) ;
- le premier équipement de réglage (26a) est réalisé pour faire tourner et/ou pivoter le premier agencement de miroir (25a) de telle sorte que le faisceau laser (16) est réglé ou déplacé principalement ou exclusivement le long
a) de l'axe Y ; ou
b) de l'axe Z ;
- le deuxième équipement de réglage (26b) est réalisé pour faire tourner et/ou pivoter le deuxième agencement de miroir (25b) de telle sorte que le faisceau laser (16) est réglé ou déplacé principalement ou exclusivement le long
a) de l'axe Z ; ou
b) de l'axe Y,
- l'axe Y et l'axe Z forment un angle de 90° l'un par rapport à l'autre et un angle de 90° par rapport à l'axe X, l'axe X s'étendant le long de l'axe central (7) .

18. Dispositif de découpe au laser (3) selon la revendication 17, **caractérisé par** la particularité suivante :
- l'axe central (7) du dispositif de serrage (2) s'étend à travers le deuxième agencement de miroir (25b) ou le dernier agencement de miroir (25b).

19. Dispositif de découpe au laser (3) selon la revendication 17 ou 18, **caractérisé par** la particularité suivante :
- le premier agencement de miroir (25a) et le deuxième agencement de miroir (25b) sont disposés de manière décalée l'un par rapport à l'autre uniquement dans
a) la direction Y ; ou
b) la direction Z ; ou
c) la direction Z et la direction Y.

20. Dispositif de découpe au laser (3) selon l'une quelconque des revendications 15 à 19, **caractérisé par** la particularité suivante :
- le dispositif de déviation de faisceau laser (18) est réalisé pour guider le faisceau laser (16) de telle sorte que le faisceau laser (16) se déplace plus de 2, 3, 4, 5, 6, 7, 8, 9, 10, 15, 20, 25 ou plus de 30 fois la seconde le long d'une trajectoire sur la zone de face frontale (5) du dispositif de serrage (2) de 360° autour de l'axe central (7).

21. Dispositif de découpe au laser (3) selon l'une quelconque des revendications 15 à 20, **caractérisé par** les particularités suivantes :
- l'équipement laser (15) comprend un équipement télescopique (19) ;
- l'équipement télescopique (19) de l'équipement laser (15) est disposé entre une source laser (17) de l'équipement laser (15) et le dispositif de déviation de faisceau laser (18) de l'équipement laser (15), et est réalisé pour modifier la focalisation du faisceau laser (16).

22. Dispositif de découpe au laser (3) selon l'une quelconque des revendications précédentes, **caractérisé par** les particularités suivantes :
- pendant la découpe au laser, le dispositif de serrage (2) et une source laser (17) de l'équipement laser (15) sont disposés :
a) de manière relativement fixe l'un par rapport à l'autre ; et/ou
b) de manière stationnaire.

23. Dispositif de découpe au laser (3) selon l'une quelconque des revendications précédentes, **caractérisé par** les particularités suivantes :
- un équipement à buse (70) est prévu qui est disposé dans la chambre de découpe (21) ;
- l'équipement de buse (70) comprend au moins une buse (71) et est réalisé pour éjecter de l'air ou un gaz de traitement à partir de celle-ci dans la chambre de découpe (21) ;
- un dispositif d'aspiration (40) est prévu qui présente une ou plusieurs ouvertures d'aspiration, le dispositif d'aspiration (40) étant réalisé pour aspirer l'air amené ou le gaz de traitement amené par l'équipement à buse (70) et les émissions créées par le processus de découpe au laser et/ou des morceaux coupés du câble blindé (1).

24. Dispositif de découpe au laser (3) selon la revendication 23, **caractérisé par** la particularité suivante :
- ladite au moins une buse (71) de l'équipement à buse (70) présente une ouverture de sortie de buse principale (72) et plusieurs ouvertures de sortie de buse secondaires (73), dans lequel l'ouverture de sortie de buse principale (72) est disposée de telle sorte que l'air ou le gaz de traitement circule vers la zone de face frontale (5) du dispositif de serrage (2), et dans lequel les ouvertures de sortie de buse secondaires (73) sont disposées de telle sorte que l'air ou le gaz de traitement circule vers une paroi intérieure (54) de l'agencement de boîtier (50).

25. Dispositif de découpe au laser (3) selon l'une quelconque des revendications précédentes ou selon la revendication 2, **caractérisé par** les particularités suivantes :
- un dispositif de transport et de maintien (60) est prévu ; et
a) le dispositif de transport et de maintien (60) est réalisé pour maintenir le dispositif de serrage (2) ou le câble blindé (1) et pour le déplacer dans la chambre de découpe (21) à travers l'ouverture d'introduction de câble (51) ;
ou
b) le dispositif de commande (10) est réalisé pour piloter le dispositif de transport et de maintien (60) de telle sorte que celui-ci introduit le câble blindé (1) dans la chambre de découpe (21) par l'ouverture d'introduction de câble (51) et le positionne entre ladite au moins une première et deuxième mâchoires de serrage (2a, 2b), et le dispositif de commande (10) est en outre réalisé pour piloter le dispositif de serrage (2) de telle sorte que celui-ci rapproche ladite au moins une première et deuxième mâchoires de serrage (2a, 2b) l'une de l'autre de sorte que le câble blindé (1) peut être serré entre ladite au moins une première et deuxième mâchoires de serrage (2a, 2b).

26. Dispositif de découpe au laser (3) selon la revendication 25, **caractérisé par** la particularité suivante :
- le dispositif de transport et de maintien (60) comprend un élargissement (61), dans lequel, pendant la découpe au laser, cet élargissement (61) s'applique contre l'ouverture d'introduction de câble (51) et la ferme de manière étanche à la lumière et/ou à la poussière et/ou à l'air.

27. Dispositif de découpe au laser (3) selon l'une quelconque des revendications précédentes, **caractérisé par** la particularité suivante :
- l'axe central (7) s'étend en affleurement avec un axe longitudinal du câble blindé (1) qui peut être serré dans le dispositif de serrage (2).

28. Dispositif de découpe au laser (3) selon l'une quelconque des revendications précédentes, **caractérisé par** les particularités suivantes :
- un dispositif de transport et de maintien (60) est prévu ;
- le dispositif de transport et de maintien (60) est réalisé pour maintenir le dispositif de serrage (2) ;
- le dispositif de commande (10) est réalisé pour activer l'équipement laser (15), et :
a) le dispositif de commande (10) est en outre réalisé pour piloter le dispositif de transport et de maintien (60) de telle sorte que celui-ci fait tourner le dispositif de serrage (2) autour de l'axe central (7) de sorte que les fils de blindage (1b) du câble blindé (1), relevés radialement ou avec une composante radiale, peuvent être découpés par le faisceau laser (16) ;
ou
b) un dispositif rotatif est prévu, dans lequel l'équipement laser (15) est disposé sur le dispositif rotatif, et dans lequel le dispositif de commande (10) est réalisé pour piloter le dispositif rotatif de telle sorte qu'il fait tourner l'équipement laser (15) à distance autour de l'axe central (7) de sorte que les fils de blindage (1b) du câble blindé (1), faisant saillie radialement, peuvent être découpés par le faisceau laser (16).

29. Procédé de découpe au laser de câbles blindés (1) à l'aide d'un dispositif de découpe au laser (3) selon l'une quelconque des revendications précédentes, **caractérisé par** les étapes de procédé suivantes consistant à :
- placer le câble blindé (1) dans le dispositif de serrage (2) et relever (S₁) les fils de blindage (1b) du câble blindé (1) ;
- piloter (S₂) l'équipement laser (15) de telle sorte que le faisceau laser (16) rencontre les fils de blindage relevés (1b) au niveau de la zone de face frontale (5) du dispositif de serrage (2) ; et
- guider (S₃) le faisceau laser (16) de sorte que le faisceau laser (16) tronque les fils de blindage (1b) du câble blindé (1) et les découpe de préférence à une longueur déterminée ou prédéfinissable, en outre **caractérisé par** les particularités suivantes :
- après l'étape de procédé S₁, l'étape de procédé suivante S_{1A} est exécutée :
i) déplacer le dispositif de serrage (2) en direction du dispositif de contre-serrage (30), et/ou déplacer le dispositif de contre-serrage (30) en direction du dispositif de serrage (2) ;
et/ou
- après l'étape de procédé S₃, l'étape de procédé suivante S_{3A} est exécutée :
i) ouvrir le dispositif de serrage (2) et retirer le câble blindé découpé (1) ; ou
ii) ouvrir le dispositif de contre-serrage (30) et ouvrir le dispositif de serrage (2) et retirer le câble découpé (1).
